(19) Europäisches Patentamt
European Patent Office
Office européen des brevets

(11) **EP 4 734 424 A1**

(12) **EUROPEAN PATENT APPLICATION**
published in accordance with Art. 153(4) EPC

(43) Date of publication:
**29.04.2026 Bulletin 2026/18**

(21) Application number: **23948862.0**

(22) Date of filing: **16.08.2023**

(51) International Patent Classification (IPC):
**H04L 5/00** (2006.01)

(52) Cooperative Patent Classification (CPC):
**H04L 5/00**

(86) International application number:
**PCT/CN2023/113410**

(87) International publication number:
**WO 2025/035433 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **BI, Xiaoyan
Shenzhen, Guangdong 518129 (CN)**
• **GE, Yiqun
Shenzhen, Guangdong 518129 (CN)**
• **SHI, Wuxian
Shenzhen, Guangdong 518129 (CN)**
• **MA, Jianglei
Shenzhen, Guangdong 518129 (CN)**
• **TONG, Wen
Shenzhen, Guangdong 518129 (CN)**
• **XI, Xiaojun
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **COMMUNICATION METHOD AND COMMUNICATION DEVICE**

(57) This application provides a communication method and a communication apparatus. In the method, a first apparatus receives a reference signal. A frequency domain position of the reference signal and a transmit antenna port corresponding to the frequency domain position are a combination of frequency domain position and transmit antenna port that corresponds to a first index in an arrangement matrix. In other words, the reference signal received by the first apparatus may be a part of reference signals (for example, only a part of all receive antenna ports and a part of all frequency domain positions are occupied). This helps reduce pilot overheads for sending the reference signal. The first apparatus sends a first channel matrix or a second channel matrix. In other words, in comparison with a precoding matrix indicator feedback manner, in this method in which the first channel matrix or the second channel matrix is fed back by the first apparatus, less information is fed back (for example, only one channel matrix needs to be fed back), so that feedback overheads of the reference signal can be reduced.

```
First apparatus                                          Second apparatus

        S101: The second apparatus sends a reference signal,
        where a frequency domain position of the reference
      signal and a transmit antenna port corresponding to the
            frequency domain position are a combination of
       frequency domain position and transmit antenna port that
       corresponds to a first index in an arrangement matrix
   <----------------------------------------------------------

        S102: The first apparatus sends a first channel matrix
                     or a second channel matrix
   ---------------------------------------------------------->
```

FIG. 3

# EP 4 734 424 A1

**Description**

## TECHNICAL FIELD

This application relates to the field of communication technologies, and in particular, to a communication method and a communication apparatus.

## BACKGROUND

In a 5th generation new radio (5th generation new radio, 5G NR) communication technology, a channel state information-reference signal (channel state information-reference signal, CSI-RS) supports occupying a plurality of resource element (resource element, RE) resources through a multi-antenna port. For example, when a current 5G NR CSI-RS pattern is used, a quantity of pilot resources used to send a reference signal is proportionally increased based on a quantity of antenna ports (for example, a maximum quantity of ports supported in current 5G is 32, and a quantity of antenna ports may be expanded to 1024 or a larger number in future communication). Consequently, CSI-RS pilot overheads are significantly increased. In addition, a precoding matrix indicator (precoding matrix indicator, PMI) feedback manner is currently used in 5G NR. Because singular value decomposition (singular value decomposition, SVD) calculation needs to be performed on a matrix in an antenna port dimension for PMI calculation, CSI-RS feedback overheads (including calculation complexity and a quantity of codebooks fed back by using a PMI) are also increased sharply in a future large-scale antenna scenario.

## SUMMARY

This application provides a communication method and a communication apparatus. The method can reduce feedback overheads of a reference signal.

According to a first aspect, this application provides a communication method. The method is performed by a first apparatus. The first apparatus may be a terminal, may be a component (for example a processor, a chip, or a chip system) of a terminal, or may be a logical module that can implement all or a part of functions of a terminal. The first apparatus receives a reference signal, where a frequency domain position of the reference signal and a transmit antenna port corresponding to the frequency domain position are a combination of frequency domain position and transmit antenna port that corresponds to a first index in an arrangement matrix, the arrangement matrix is obtained based on a first projection matrix and a first decomposition manner, and the first projection matrix is obtained based on a training matrix and a second decomposition manner. The first apparatus sends a first channel matrix or a second channel matrix, where the first channel matrix is determined based on a receive antenna port and the combination of frequency domain position and transmit antenna port that corresponds to the first index in the arrangement matrix, the second channel matrix is determined based on the first channel matrix and a second projection matrix, and the second projection matrix is determined based on the arrangement matrix and the first projection matrix or is indicated by a second apparatus.

In the method, the reference signal received by the first apparatus occupies only a part of frequency domain positions and a part of transmit antenna ports in all transmit antenna ports and all frequency domain positions, and the part of occupied frequency domain positions and the part of occupied transmit antenna ports are arranged unevenly in space formed by all the transmit antenna ports and all the frequency domain positions. This helps reduce pilot overheads for sending the reference signal. In addition, in comparison with a precoding matrix indicator feedback manner, in this method in which the first channel matrix or the second channel matrix is fed back by the first apparatus, less information is fed back (for example, only one channel matrix needs to be fed back), so that feedback overheads of the reference signal can be reduced.

In a possible implementation, the first apparatus performs channel estimation based on the reference signal, to determine the first channel matrix. The first apparatus receives the second projection matrix, or performs training based on the training matrix and the first projection matrix to obtain the second projection matrix. The first apparatus determines the second channel matrix based on the first channel matrix and the second projection matrix.

In the method, the first apparatus may directly and explicitly feed back the first channel matrix. Alternatively, the first apparatus may determine the second channel matrix based on the first channel matrix and the second projection matrix, to implicitly feed back the second channel matrix (where "implicitly" indicates that the second apparatus needs to convert the second channel matrix into the first channel matrix after receiving the second channel matrix, to reconstruct a channel). Both explicit and implicit feedback can reduce feedback overheads of the reference signal.

In a possible implementation, the first channel matrix includes a channel matrix on one or more groups of receive antenna ports corresponding to the combination of frequency domain position and transmit antenna port of the reference signal; and the second channel matrix may be obtained by multiplying the first channel matrix by an inverse matrix of the second projection matrix.

In the method, because the frequency domain position of the reference signal is in one-to-one correspondence with the transmit antenna port, the first channel matrix fed back by the first apparatus includes the channel matrix on the one or more groups of receive antenna ports corresponding to the combination of frequency domain position and transmit antenna port of the reference signal. For example, a receive antenna port corresponding to any combination of frequency domain position and transmit antenna port of the reference signal includes an $i^{th}$ frequency domain position and a $j^{th}$ receive antenna port, where the $i^{th}$ frequency domain position is in one-to-one correspondence with a $k^{th}$ transmit antenna port, and i, j, and k are positive integers. In this case, the first channel matrix includes a channel matrix on the $i^{th}$ frequency domain position, the $k^{th}$ transmit antenna port, and the $j^{th}$ receive antenna port. The second channel matrix includes a coefficient corresponding to the first channel matrix, and the coefficient herein is a mathematical value.

In a possible implementation, a quantity of elements in the first channel matrix or a quantity of elements in the second channel matrix is r, where r is a quantity of combinations of frequency domain position and transmit antenna port that correspond to the first index in the arrangement matrix.

In a possible implementation, the first apparatus receives second information, where the second information indicates an index of a receive antenna port that needs to be fed back. The first channel matrix includes a channel matrix on the receive antenna port that needs to be fed back and that corresponds to the combination of frequency domain position and transmit antenna port of the reference signal.

In the foregoing method, the first channel matrix or the second channel matrix includes a combination of the one or more groups of receive antenna ports at the frequency domain position of the reference signal. In other words, the first channel matrix or the second channel matrix carries only combination information of the receive antenna port and the frequency domain position, so that feedback overheads of the reference signal can be further reduced (only a combination of a part of receive antenna ports and the frequency domain position is fed back, and fewer channel matrices are fed back). However, a base station needs to additionally indicate, to the terminal, the index of the receive antenna port that needs to be fed back (for example, use a small part of air interface resources to indicate the index of the receive antenna port).

In a possible implementation, the first channel matrix includes a channel matrix on a part or all of receive antenna ports corresponding to the combination of frequency domain position and transmit antenna port of the reference signal. For example, the part or all of the receive antenna ports corresponding to the combination of frequency domain position and transmit antenna port of the reference signal include: For any frequency domain position (where it is assumed that the frequency domain position is an $i^{th}$ frequency domain position), all receive antenna ports corresponding to a combination of the $i^{th}$ frequency domain position and a $j^{th}$ receive antenna port include a combination of the $i^{th}$ frequency domain position, a $k^{th}$ transmit antenna port, and a $1^{st}$ receive antenna port, ..., and a combination of the $i^{th}$ frequency domain position, the $k^{th}$ transmit antenna port, and an $n^{th}$ receive antenna port, where n is a positive integer. The second channel matrix includes a coefficient corresponding to the first channel matrix, and the coefficient herein is a mathematical value.

In a possible implementation, a quantity of elements in the first channel matrix or a quantity of elements in the second channel matrix is r*n, where r is a quantity of combinations of frequency domain position and transmit antenna port that correspond to the first index in the arrangement matrix, and n is a quantity of the part or all of the receive antenna ports.

In comparison with a precoding matrix indicator feedback manner, in the foregoing method in which the first channel matrix or the second channel matrix includes a combination of the part or all of the receive antenna ports at the frequency domain position at which the reference signal is sent, feedback overheads of the reference signal are significantly reduced. Although more channel matrices need to be fed back (for example, the combination of the part or all of the receive antenna ports at the frequency domain position at which the reference signal is sent is fed back), a base station does not need to additionally indicate, to the terminal, an index of a receive antenna port that needs to be fed back.

In a possible implementation, the first apparatus receives third information, where the third information includes the second projection matrix; or the third information indicates the second projection matrix.

In the foregoing method, the first apparatus may receive the second projection matrix. Alternatively, when the terminal knows the first projection matrix, the first apparatus receives the third information indicating the second projection matrix (where it is assumed that the third information includes the arrangement matrix), so that the terminal can determine the second projection matrix based on the first projection matrix and the arrangement matrix. Alternatively, when the terminal knows dimensions of the first projection matrix and the arrangement matrix, the first apparatus receives the first index in the arrangement matrix (where for example, the first index in the arrangement matrix indicates a position of the reference signal).

In a possible implementation, the first apparatus performs channel estimation on reference signals at different frequency domain positions by using a single sequence; performs channel estimation on reference signals at different frequency domain positions by using a plurality of filters; or performs channel estimation on reference signals at a same frequency domain position by using a spatial filter.

In the method, the first apparatus may perform channel estimation on the reference signal in different manners, to obtain the first channel matrix or the second channel matrix.

In a possible implementation, the first apparatus receives fourth information, where the fourth information indicates a terminal device to feed back the first channel matrix or the second channel matrix.

In the method, the first apparatus may receive a reference signal feedback configuration. For example, the reference signal feedback configuration indicates the first apparatus to perform feedback in an explicit or implicit manner, and indicates the first apparatus to feed back the first channel matrix or the second channel matrix.

According to a second aspect, this application provides a communication method. The method is performed by a second apparatus. The second apparatus may be a network device, may be a component (for example, a processor, a chip, or a chip system) of a network device, or may be a logical module that can implement all or a part of functions of a network device. The second apparatus sends a reference signal, where a frequency domain position of the reference signal and a transmit antenna port corresponding to the frequency domain position are a combination of frequency domain position and transmit antenna port that corresponds to a first index in an arrangement matrix, the arrangement matrix is obtained based on a first projection matrix and a first decomposition manner, and the first projection matrix is obtained based on a training matrix and a second decomposition manner. The second apparatus receives a first channel matrix or a second channel matrix, where the first channel matrix is determined based on a receive antenna port and the combination of frequency domain position and transmit antenna port that corresponds to the first index in the arrangement matrix, the second channel matrix is determined based on the first channel matrix and a second projection matrix, and the second projection matrix is determined based on the arrangement matrix and the first projection matrix or is indicated by the second apparatus.

In the method, the second apparatus may send a part of reference signals to a first apparatus (where for example, the part of reference signals occupy only a part of frequency domain positions and a part of transmit antenna ports in all transmit antenna ports and all frequency domain positions, and the part of occupied frequency domain positions and the part of occupied transmit antenna ports are arranged unevenly in space formed by all the transmit antenna ports and all the frequency domain positions), so that pilot overheads for sending the reference signal can be reduced. In addition, in comparison with a precoding matrix indicator feedback manner, in this method in which the second apparatus receives the first channel matrix or the second channel matrix fed back by the first apparatus, less information is fed back (for example, only one channel matrix needs to be fed back). This helps reduce feedback overheads of the reference signal.

In a possible implementation, the second apparatus combines channel matrices of a plurality of time units into the training matrix, and decomposes the training matrix in the second decomposition manner, to obtain an intermediate matrix and a rank obtained through decomposition. The second apparatus selects, from the intermediate matrix, a column corresponding to the rank obtained through decomposition to obtain the first projection matrix. The second apparatus decomposes the first projection matrix in the first decomposition manner to obtain the arrangement matrix.

In the method, the second apparatus may determine the arrangement matrix through pre-training and operations in combination with the first decomposition manner (for example, an orthogonal triangular QR decomposition manner or a machine learning manner), the second decomposition manner (for example, a singular value decomposition SVD manner or a machine learning manner), and the like, and the combination that is of the frequency domain position and the transmit antenna port corresponding to the frequency domain position and that corresponds to the first index in the arrangement matrix is the combination of frequency domain position and transmit antenna port of the reference signal. This helps reduce pilot overheads for sending the reference signal.

In a possible implementation, the first channel matrix includes a channel matrix on one or more groups of receive antenna ports corresponding to a combination of frequency domain position and transmit antenna port of the reference signal; and the second channel matrix is obtained by multiplying the first channel matrix by an inverse matrix of the second projection matrix.

In the method, when a receive end performs feedback to a transmit end, because the frequency domain position is in one-to-one correspondence with the transmit antenna port, the first channel matrix includes the channel matrix on the one or more groups of receive antenna ports corresponding to the combination of frequency domain position and transmit antenna port of the reference signal. For example, a receive antenna port corresponding to any combination of frequency domain position and transmit antenna port of the reference signal includes an $i^{th}$ frequency domain position and a $j^{th}$ receive antenna port, where the $i^{th}$ frequency domain position is in one-to-one correspondence with a $k^{th}$ transmit antenna port, and i, j, and k are positive integers. In this case, the first channel matrix includes a channel matrix on the $i^{th}$ frequency domain position, the $k^{th}$ transmit antenna port, and the $j^{th}$ receive antenna port. The second channel matrix includes a coefficient corresponding to the first channel matrix, and the coefficient herein is a mathematical value.

In a possible implementation, a quantity of elements in the first channel matrix or a quantity of elements in the second channel matrix is r, where r is a quantity of combinations of frequency domain position and transmit antenna port that correspond to the first index in the arrangement matrix.

In a possible implementation, the second apparatus sends second information, where the second information indicates an index of a receive antenna port that needs to be fed back.

In an implementation in which the second apparatus receives the first channel matrix, the second apparatus receives a channel matrix on the receive antenna port that needs to be fed back and that corresponds to the combination of frequency domain position and transmit antenna port of the reference signal.

In the foregoing method, the first channel matrix or the second channel matrix includes a combination of one or more groups of receive antenna ports and the frequency domain position. In other words, the first channel matrix or the second channel matrix carries only information about a part of receive antenna ports corresponding to the combination of frequency domain position and transmit antenna port of the reference signal, so that feedback overheads of the reference signal can be further reduced (fewer channel matrices are fed back). However, a base station needs to additionally indicate, to a terminal, the index of the receive antenna port that needs to be fed back (for example, use a small part of air interface resources to indicate the index of the receive antenna port).

In a possible implementation, the first channel matrix includes a channel matrix on a part or all of receive antenna ports corresponding to the combination of frequency domain position and transmit antenna port of the reference signal. For example, the part or all of the receive antenna ports corresponding to the combination of frequency domain position and transmit antenna port of the reference signal include: For any frequency domain position (where it is assumed that the frequency domain position is an $i^{th}$ frequency domain position), a part or all of receive antenna ports corresponding to a combination of the $i^{th}$ frequency domain position and a $j^{th}$ receive antenna port include a combination of the $i^{th}$ frequency domain position, a $k^{th}$ transmit antenna port, and a $1^{st}$ receive antenna port, ..., and a combination of the $i^{th}$ frequency domain position, the $k^{th}$ transmit antenna port, and an $n^{th}$ receive antenna port, where n is a positive integer. The second channel matrix includes a coefficient corresponding to the first channel matrix, and the coefficient herein is a mathematical value.

In a possible implementation, a quantity of elements in the first channel matrix or a quantity of elements in the second channel matrix is r*n, where r is a quantity of combinations of frequency domain position and transmit antenna port that correspond to the first index in the arrangement matrix, and n is a quantity of the part or all of the receive antenna ports.

In comparison with a precoding matrix indicator feedback manner, in the foregoing method in which the first channel matrix or the second channel matrix includes a combination of the part or all of the receive antenna ports at the frequency domain position at which the reference signal is sent, feedback overheads of the reference signal are significantly reduced. Although more channel matrices need to be fed back (the combination of the part or all of the receive antenna ports at the frequency domain position at which the reference signal is sent is fed back), a base station does not need to additionally indicate, to a terminal, an index of a receive antenna port that needs to be fed back.

In a possible implementation, the second apparatus sends third information, where the third information includes the second projection matrix; or the third information indicates the second projection matrix.

In the foregoing method, the second apparatus may send the second projection matrix to a first apparatus. Alternatively, when a terminal knows the first projection matrix, the second apparatus sends the third information indicating the second projection matrix (where it is assumed that the third information includes the arrangement matrix), so that the terminal determines the second projection matrix based on the first projection matrix and the arrangement matrix. Alternatively, when a terminal knows dimensions of the first projection matrix and the arrangement matrix, the second apparatus sends the first index in the arrangement matrix (where for example, the first index in the arrangement matrix indicates a position of the reference signal).

In a possible implementation, the second apparatus determines a resource pattern of the reference signal based on channel matrices of a plurality of time units; and maps a port in the resource pattern to a resource element in time domain and/or frequency domain based on the resource pattern.

In the method, the second apparatus may train the pattern of the reference signal, and configure the pattern of the reference signal, so that the second apparatus can determine a position of the reference signal based on the pattern of the reference signal.

In a possible implementation, the second apparatus maps n transmit antenna ports to a same code division multiplexing group, where the n transmit antenna ports are configured for each terminal device and are dynamically configurable.

In the method, the second apparatus may map the port of the reference signal to the code division multiplexing group in a dynamic/configurable manner, to implement a flexible code division multiplexing configuration.

In a possible implementation, the second apparatus sends fourth information, where the fourth information indicates the terminal device to feed back the first channel matrix or the second channel matrix.

In the method, the second apparatus may design a reference signal feedback configuration. For example, the reference signal feedback configuration indicates a first apparatus to perform feedback in an explicit or implicit manner, and indicates the first apparatus to feed back the first channel matrix or the second channel matrix.

According to a third aspect, this application provides a communication apparatus. The communication apparatus may be a terminal, may be an apparatus in a terminal, or may be an apparatus that can be used together with a terminal. In a possible implementation, the communication apparatus may include a functional module. The functional module may be implemented by a hardware circuit, software, or a combination of a hardware circuit and software.

In a possible implementation, the communication apparatus includes a communication unit. The communication unit is configured to receive a reference signal, where a frequency domain position of the reference signal and a transmit antenna port corresponding to the frequency domain position are a combination of frequency domain position and transmit antenna port that corresponds to a first index in an arrangement matrix, the arrangement matrix is obtained based on a first projection matrix and a first decomposition manner, and the first projection matrix is obtained based on a training matrix and a second decomposition manner. The communication unit is further configured to send a first channel matrix or a second channel matrix, where the first channel matrix is determined based on a receive antenna port and the combination of frequency domain position and transmit antenna port that corresponds to the first index in the arrangement matrix, the second channel matrix is determined based on the first channel matrix and a second projection matrix, and the second projection matrix is determined based on the arrangement matrix and the first projection matrix or is indicated by a second apparatus.

In a possible implementation, the communication apparatus further includes a processing unit. The processing unit is configured to perform channel estimation based on the reference signal, to determine the first channel matrix. The communication unit is configured to receive the second projection matrix, or the processing unit is configured to perform training based on the training matrix and the first projection matrix to obtain the second projection matrix. The processing unit is configured to determine the second channel matrix based on the first channel matrix and the second projection matrix.

In a possible implementation, the first channel matrix includes a channel matrix on one or more groups of receive antenna ports corresponding to the combination of frequency domain position and transmit antenna port of the reference signal; and the second channel matrix is obtained by multiplying the first channel matrix by an inverse matrix of the second projection matrix.

In a possible implementation, a quantity of elements in the first channel matrix or a quantity of elements in the second channel matrix is r, where r is a quantity of combinations of frequency domain position and transmit antenna port that correspond to the first index in the arrangement matrix.

In a possible implementation, the communication unit is configured to receive second information, where the second information indicates an index of a receive antenna port that needs to be fed back.

In a possible implementation, the communication unit is configured to send a channel matrix on the receive antenna port that needs to be fed back and that corresponds to the combination of frequency domain position and transmit antenna port of the reference signal.

In a possible implementation, the first channel matrix includes a channel matrix on a part or all of receive antenna ports corresponding to the combination of frequency domain position and transmit antenna port of the reference signal.

In a possible implementation, a quantity of elements in the first channel matrix or a quantity of elements in the second channel matrix is r*n, where r is a quantity of combinations of frequency domain position and transmit antenna port that correspond to the first index in the arrangement matrix, and n is a quantity of the part or all of the receive antenna ports.

In a possible implementation, the communication unit is configured to receive third information, where the third information includes the second projection matrix; or the third information indicates the second projection matrix.

In a possible implementation, the processing unit is configured to: perform channel estimation on reference signals at different frequency domain positions by using a single sequence; perform channel estimation on reference signals at different frequency domain positions by using a plurality of filters; or perform channel estimation on reference signals at a same frequency domain position by using a spatial filter.

In a possible implementation, the communication unit is configured to receive fourth information, where the fourth information indicates a terminal device to feed back the first channel matrix or the second channel matrix.

According to a fourth aspect, this application provides a communication apparatus. The communication apparatus may be a network device, an apparatus in a network device, or an apparatus that can be used together with a network device. In a possible implementation, the communication apparatus may include a functional module. The functional module may be implemented by a hardware circuit, software, or a combination of a hardware circuit and software.

In a possible implementation, the communication apparatus includes a communication unit. The communication unit is configured to send a reference signal, where a frequency domain position of the reference signal and a transmit antenna port corresponding to the frequency domain position are a combination of frequency domain position and transmit antenna port that corresponds to a first index in an arrangement matrix, the arrangement matrix is obtained based on a first projection matrix and a first decomposition manner, and the first projection matrix is obtained based on a training matrix and a second decomposition manner. The communication unit is further configured to receive a first channel matrix or a second channel matrix, where the first channel matrix is determined based on a receive antenna port and the combination of frequency domain position and transmit antenna port that corresponds to the first index in the arrangement matrix, the second channel matrix is determined based on the first channel matrix and a second projection matrix, and the second projection matrix is determined based on the arrangement matrix and the first projection matrix or is indicated by a second apparatus.

In a possible implementation, the communication apparatus further includes a processing unit. The processing unit is configured to combine channel matrices of a plurality of time units into the training matrix. The processing unit is further configured to decompose the training matrix in the second decomposition manner, to obtain an intermediate matrix and a rank obtained through decomposition. The processing unit is further configured to select, from the intermediate matrix, a column corresponding to the rank obtained through decomposition to obtain the first projection matrix. The processing unit is further configured to decompose the first projection matrix in the first decomposition manner to obtain the arrangement matrix.

In a possible implementation, the first channel matrix includes a channel matrix on one or more groups of receive antenna ports corresponding to the combination of frequency domain position and transmit antenna port of the reference signal; and the second channel matrix is obtained by multiplying the first channel matrix by an inverse matrix of the second projection matrix.

In a possible implementation, a quantity of elements in the first channel matrix or a quantity of elements in the second channel matrix is r, where r is a quantity of combinations of frequency domain position and transmit antenna port that correspond to the first index in the arrangement matrix.

In a possible implementation, the communication unit is configured to send second information, where the second information indicates an index of a receive antenna port that needs to be fed back.

In a possible implementation, the communication unit is configured to receive a channel matrix on the receive antenna port that needs to be fed back and that corresponds to the combination of frequency domain position and transmit antenna port of the reference signal.

In a possible implementation, the first channel matrix includes a channel matrix on a part or all of receive antenna ports corresponding to the combination of frequency domain position and transmit antenna port of the reference signal. For example, all of the receive antenna ports corresponding to the combination of frequency domain position and transmit antenna port of the reference signal include: For any frequency domain position (where it is assumed that the frequency domain position is the $i^{th}$ frequency domain position), all receive antenna ports corresponding to a combination of the $i^{th}$ frequency domain position and the $j^{th}$ receive antenna port include a combination of the $i^{th}$ frequency domain position, a $k^{th}$ transmit antenna port, and a $1^{st}$ receive antenna port, ..., and a combination of the $i^{th}$ frequency domain position, the $k^{th}$ transmit antenna port, and an $n^{th}$ receive antenna port, where n is a positive integer. The second channel matrix includes a coefficient corresponding to the first channel matrix, and the coefficient herein is a mathematical value.

In a possible implementation, a quantity of elements in the first channel matrix or a quantity of elements in the second channel matrix is r*n, where r is a quantity of combinations of frequency domain position and transmit antenna port that correspond to the first index in the arrangement matrix, and n is a quantity of the part or all of the receive antenna ports.

In a possible implementation, the communication unit is configured to send third information, where the third information includes the second projection matrix; or the third information indicates the second projection matrix.

In a possible implementation, the processing unit is configured to determine a resource pattern of the reference signal based on the channel matrices of the plurality of time units. The processing unit is configured to map a port in the resource pattern to a resource element in time domain and/or frequency domain based on the resource pattern.

In a possible implementation, the processing unit is configured to map n transmit antenna ports to a same code division multiplexing group, where the n transmit antenna ports are configured for each terminal device and are dynamically configurable.

In a possible implementation, the communication unit is configured to send fourth information, where the fourth information indicates the terminal device to feed back the first channel matrix or the second channel matrix.

For the third aspect or the fourth aspect, in an example, the processing unit may be a processor, and the communication unit may be a transceiver unit, a transceiver, or a communication interface. It may be understood that when the communication apparatus is a communication device (for example, a terminal or a network device), the communication unit may be a transceiver (for example, and the transceiver includes a transmitter and a receiver) in the communication apparatus, for example, implemented by using an antenna, a feeder, and a codec in the communication apparatus. Alternatively, if the communication apparatus is a chip disposed in a device, the processing unit may be a processing circuit, a logic circuit, or the like of the chip, and the communication unit may be an input/output interface of the chip, for example, an input/output circuit or a pin.

According to a fifth aspect, this application provides a communication apparatus, including a processor, configured to execute instructions. Optionally, the communication apparatus further includes a memory, and the memory is configured to store the instructions. When the instructions are executed by the processor, the communication apparatus is caused to implement the method according to any one of the first aspect and the possible implementations of the first aspect. Optionally, the processor is coupled to the memory.

According to a sixth aspect, this application provides another communication apparatus, including a processor, configured to execute instructions. Optionally, the communication apparatus further includes a memory, and the memory is configured to store the instructions. When the instructions are executed by the processor, the communication apparatus is caused to implement the method according to any one of the second aspect and the possible implementations of the second aspect. Optionally, the processor is coupled to the memory.

According to a seventh aspect, this application provides a communication system. The communication system includes the plurality of apparatuses or devices according to the third aspect to the sixth aspect. The apparatuses or devices are caused to perform the method according to any one of the first aspect, the second aspect, and the possible implementations of the first aspect and the second aspect.

According to an eighth aspect, this application provides a computer-readable storage medium. The computer-readable storage medium stores instructions. When the instructions are run on a computer, the computer is caused to perform the method according to any one of the first aspect, the second aspect, and the possible implementations of the first aspect and the second aspect.

According to a ninth aspect, this application provides a chip system. The chip system includes a processor and an interface, and optionally, may further include a memory. The chip system is configured to implement the method according to any one of the first aspect, the second aspect, and the possible implementations of the first aspect and the second aspect. The chip system may include a chip, or may include a chip and another discrete component.

According to a tenth aspect, this application provides a computer program product, including instructions. When the instructions are run on a computer, the computer is caused to perform the method according to any one of the first aspect, the second aspect, and the possible implementations of the first aspect and the second aspect.

**BRIEF DESCRIPTION OF DRAWINGS**

FIG. 1 is a diagram of a communication system according to this application;

FIG. 2 is a schematic flowchart of performing CSI measurement and feedback by a base station and a terminal;

FIG. 3 is a schematic flowchart of a communication method according to this application;

FIG. 4 is a diagram of a training process of an arrangement matrix according to this application;

FIG. 5 is a diagram of a dynamic CDM group according to this application;

FIG. 6 is a diagram of a relationship between a first channel matrix and a channel matrix on a transmit antenna port, a receive antenna port, and a frequency domain position according to this application;

FIG. 7 is a diagram of a relationship between a first channel matrix and a second channel matrix according to this application;

FIG. 8 is another diagram of a relationship between a first channel matrix and a channel matrix on a transmit antenna port, a receive antenna port, and a frequency domain position according to this application;

FIG. 9 is a schematic flowchart of performing channel estimation by a first apparatus based on a reference signal, to obtain and send a first channel matrix according to this application;

FIG. 10 is another schematic flowchart of performing channel estimation by a first apparatus based on a reference signal, to obtain and send a first channel matrix according to this application;

FIG. 11 is a diagram of performing CDM to increase transmit power on a CSI-RS port according to this application;

FIG. 12 is a diagram of simulation of reference signal patterns trained in different time units according to this application;

FIG. 13 is a diagram of simulation of a downlink average rate obtained after channel estimation is performed by using reference signals obtained through training in 100 time units in different signal-to-noise ratios in a communication method according to this application;

FIG. 14 is a diagram of a communication apparatus according to this application; and

FIG. 15 is a diagram of another communication apparatus according to this application.

**DESCRIPTION OF EMBODIMENTS**

In embodiments of this application, "/" may indicate an "or" relationship between associated objects. For example, A/B may indicate A or B; and "and/or" may indicate that there are three relationships between the associated objects. For example, A and/or B may indicate the following three cases: Only A exists, both A and B exist, and only B exists, where A and B may be singular or plural. For ease of describing technical solutions in embodiments of this application, in embodiments of this application, words such as "first" and "second" may be used to distinguish between technical features with a same or similar function. The words such as "first" and "second" do not limit a quantity and an execution sequence, and the words such as "first" and "second" do not limit a definite difference. In embodiments of this application, a word like "example" or "for example" indicates an example, an illustration, or descriptions. Any embodiment or design solution described as "example" or "for example" should not be explained as being more preferred or having more advantages than another embodiment or design solution. The word like "example" or "for example" is used to present a related concept in a specific manner for ease of understanding.

The following describes the technical solutions in embodiments of this application with reference to the accompanying drawings in embodiments of this application.

To reduce feedback overheads of a reference signal, this application provides a communication method. The communication method can greatly reduce the feedback overheads of the reference signal in a case of a large-scale antenna.

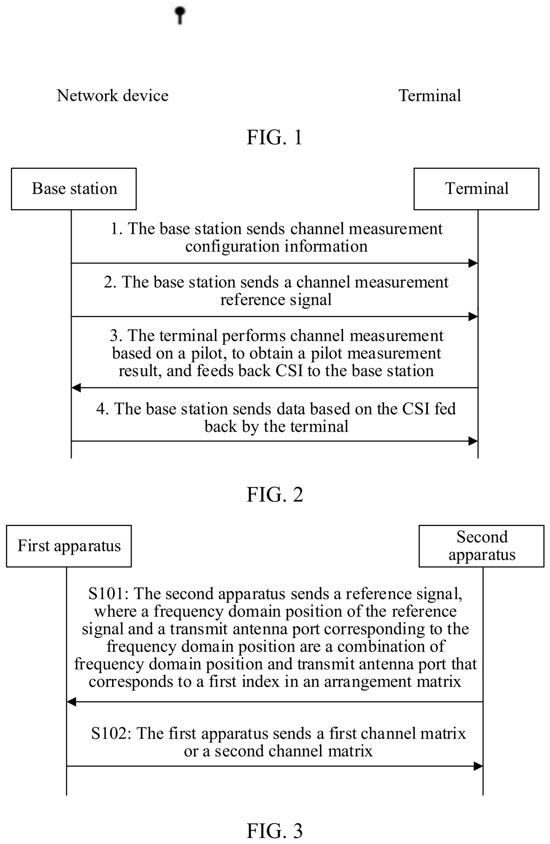

The communication method provided in this application may be applied to a communication system shown in FIG. 1. For example, the communication system includes a network device and a terminal.

The communication system in this application may include, but is not limited to, a communication system using various radio access technologies (radio access technology, RAT), for example, may be a narrowband-internet of things (narrowband-Internet of things, NB-IoT) system, a long term evolution (long term evolution, LTE) communication system, a 5G (or referred to as new radio (new radio, NR)) communication system, or a transition system between an LTE communication system and a 5G communication system, where the transition system may also be referred to as a 4.5G communication system. Certainly, the communication system may alternatively be a future communication system, for example, a 6th generation (6th generation, 6G) or even a 7th generation (7th generation, 7G) system. A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of communication network architectures and emergence of new service scenarios, the technical solutions provided in embodiments of this application are also applicable to similar technical problems.

The terminal is also referred to as a terminal (terminal) device, user equipment (user equipment, UE), a mobile station (mobile station, MS), a mobile terminal (mobile terminal, MT), or the like, and is a device that provides voice and/or data connectivity for a user, for example, a handheld device or a vehicle-mounted device having a wireless connection function. Currently, some examples of the terminal are: a mobile phone (mobile phone), a tablet computer, a notebook computer, a palmtop computer, a mobile internet device (mobile internet device, MID), a wearable device, an uncrewed aerial vehicle, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a terminal in a 5G network, a terminal in a future evolved network, a terminal in a future communication system, or the like.

The network device in this application is a radio access network (radio access network, RAN) node (or device) that connects the terminal to a wireless network, and may also be referred to as a base station. For example, some examples of the RAN node are: a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), a satellite in a satellite communication system, a radio controller in a cloud radio access network (cloud radio access network, CRAN) scenario, a wearable device, an uncrewed aerial vehicle, a device in an internet of vehicles (for example, a vehicle-to-everything (vehicle-to-everything, V2X) device), a communication device in device to device (device to device, D2D) communication, or the like. In addition, in a network structure, the network device may include a central unit (central unit, CU) node, a distributed unit (distributed unit, DU) node, or a RAN device including a CU node and a DU node. The RAN device including the CU node and the DU node splits protocol layers of an eNB in a long term evolution (long term evolution, LTE) system. Functions of a part of protocol layers are centrally controlled by a CU, functions of a part or all of remaining protocol layers are distributed in a DU, and the CU centrally controls the DU. In some deployments of the network device, the CU may be further divided into a CU-control plane (control plane, CP), a CU-user plane (user plane, UP), and the like. In some other deployments of the network device, the network device may alternatively be an antenna unit (radio unit, RU) or the like. In still some other deployments of the network device, the network device may alternatively be of an open radio access network (open radio access network, ORAN) architecture or the like. A specific type of the network device is not limited in this application. For example, when the network device is of the ORAN architecture, the network device in embodiments of this application may be an access network device in an ORAN, a module in an access network device, or the like. In an ORAN system, a CU may also be referred to as an open central unit (open CU, O-CU), a DU may also be referred to as an open distributed unit (O-DU), a CU-DU may also be referred to as an open central unit-distributed unit (O-CU-DU), a CU-UP may also be referred to as an open central unit-control plane (O-CU-UP), and an RU may also be referred to as an open antenna unit (O-RU).

It should be noted that:

"Sending" and "receiving" in embodiments of this application indicate signal transfer directions. For example, "sending information to the terminal" may be understood as a destination end of the information being the terminal device, and may include direct sending through an air interface, or indirect sending by another unit or module through an air interface. "Receiving information from the network device" may be understood as a source end of the information being the network device, and may include direct receiving from the network device through an air interface, or indirect receiving from the network device from another unit or module through an air interface. "Sending" may alternatively be understood as "outputting" of a chip interface, and "receiving" may alternatively be understood as "inputting" of a chip interface.

In other words, sending and receiving may be performed between devices, for example, between the network device and the terminal device; or may be performed inside a device, for example, sending or receiving between components, modules, chips, software modules, or hardware modules inside the device through a bus, a cable, or an interface.

It may be understood that necessary processing, such as encoding and modulation, may be performed on the information between the source end and the destination end of information sending, but the destination end may understand valid information from the source end. Similar descriptions in this application may be understood similarly, and details are not described again.

In embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information is indicated in a plurality of manners, for example, but not limited to, the following manners: The to-be-indicated information, for example, the to-be-indicated information or an index of the to-be-indicated information, may be directly indicated. Alternatively, the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, specific information may be indicated by using an arrangement order of pieces of information that are pre-agreed on (for example, predefined in a protocol), to reduce indication overheads to some extent. A specific indication manner is not limited in this application. It may be understood that, for a sender of the indication information, the indication information may indicate the to-be-indicated information, and for a receiver of the indication information, the indication information may be used to determine the to-be-indicated information.

I. For ease of understanding, the following describes in detail definitions of related terms in this application.

1. Channel state information-reference signal (channel state information-reference signal, CSI-RS)

(1) CSI-RS configuration

In a 5G communication system, a massive multiple-input multiple-output (massive multiple-input multiple-output, Massive MIMO) technology plays a critical role in spectral efficiency of the system. When the MIMO technology is used, a base station needs to perform modulation and coding and signal precoding when sending data to UE. How to send data to a user needs to depend on channel state information (channel state information, CSI) fed back by the user to the base station. In a possible implementation, there are two types of CSI-RSs: a zero power channel state information-reference signal (zero power channel state information-reference signal, ZP CSI-RS) and a non-zero power channel state information-reference signal (non-ZP CSI-RS, NZP CSI-RS). The NZP CSI-RS is mainly used to obtain a channel state (for example, perform time-frequency domain tracking, beam training, and CSI channel feedback), and the ZP CSI-RS is mainly used for rate matching.

In a possible implementation, FIG. 2 is a schematic flowchart of performing CSI measurement and feedback by a base station and UE. The following steps are included.

Step 1: The base station sends channel measurement configuration information. For example, the base station needs to first send signaling for configuring channel measurement, to notify the UE of time and behavior of channel measurement.

Step 2: The base station sends a channel measurement reference signal (also referred to as a pilot). For example, the base station sends the pilot to the UE for channel measurement. In NR, a network side may send a reference signal (for example, an NZP CSI-RS) to sound a downlink channel, and the UE receives the NZP CSI-RS signal on a preconfigured channel measurement resource (channel measurement resource, CMR) to perform channel estimation. In addition, the network side further configures a group of interference measurement resources (interference measurement resource, IMR) corresponding to the CMR for the UE, and the UE receives a signal on the preconfigured IMRs to perform interference measurement.

Step 3: The terminal performs channel measurement based on the pilot, to obtain a pilot measurement result, and feeds back CSI to the base station.

For example, the UE receives the signal on the preconfigured IMRs, and performs CSI interference measurement (CSI interference measurement, CSI-IM). The UE performs calculation based on measurement results on the CMR and the IMRs, to obtain final CSI feedback.

Step 4: The base station sends data based on the CSI fed back by the terminal.

For example, the base station determines, based on a channel rank indicator (rank indicator, RI) fed back by the UE, a quantity of streams for transmitting data to the UE; the base station determines, based on a channel quality indicator (channel quality indicator, CQI) fed back by the UE, a modulation order and a channel coding code rate for transmitting the data to the UE; and the base station determines, based on a precoding matrix indicator (precoding matrix indicator, PMI) fed back by the UE, precoding for transmitting the data to the UE.

(2) CSI measurement

An NZP CSI-RS resource used for a CMR and a CSI-IM resource used for an IMR may be periodic, semi-persistent, or aperiodic. Specifically, both the periodic/semi-persistent/aperiodic NZP CSI-RS resource and CSI-IM resource are configured for UE by using higher layer signaling (for example, radio resource control (radio resource control, RRC) signaling). For example, for the periodic NZP CSI-RS/CSI-IM resource, the UE receives an NZP CSI-RS signal on the periodic NZP CSI-RS resource at a fixed interval, or measures interference on the periodic CSI-IM resource at a fixed interval, where a periodicity of the NZP CSI-RS resource may be configured by using the higher layer signaling (for example, the RRC signaling). For another example, for the semi-persistent NZP CSI-RS/CSI-IM resource, a network side may activate and deactivate the resource by using signaling. In an activation period, the UE receives an NZP CSI-RS signal on the periodic NZP CSI-RS resource at a fixed interval, or measures interference on the periodic CSI-IM resource at a fixed interval, where a periodicity of the NZP CSI-RS resource may be configured by using the higher layer signaling (for example, the RRC signaling). For still another example, for the aperiodic NZP CSI-RS/CSI-IM resource, a network side may configure an NZP CSI-RS resource set (NZP-CSI-RS-ResourceSet) for the UE by using the higher layer signaling, where each NZP CSI-RS resource set includes a plurality of NZP CSI-RS resources, and each NZP CSI-RS resource set is configured with one slot offset (slot offset), to determine a slot in which the NZP CSI-RS resource in the set is located.

(3) CSI reporting

CSI reporting may be periodic, semi-persistent, or aperiodic, which is similar to CSI measurement.

For example, in periodic CSI reporting (periodic CSI reporting, P-CSI), a base station configures, by using higher layer signaling, UE to perform periodic CSI reporting; and the UE performs channel measurement and interference measurement based on a periodic CSI-RS resource, and reports CSI feedback at a fixed time interval. In periodic CSI reporting, both a CMR and an IMR used for CSI measurement are periodic.

For another example, in semi-persistent CSI reporting (semi-persistent CSI reporting, SP-CSI), UE is configured to perform semi-persistent CSI reporting. To be specific, the UE starts to perform CSI reporting only after receiving downlink activation signaling sent by a base station, ends CSI reporting after receiving downlink deactivation signaling, and performs periodic CSI measurement and reporting between two downlink signaling delivery moments. A CMR and an IMR used for semi-persistent CSI reporting may be periodic, or may be semi-persistent. Optionally, semi-persistent CSI reporting may be performed on a physical uplink control channel (physical uplink control channel, PUCCH) resource, and the base station activates and deactivates semi-persistent CSI reporting by using downlink higher layer signaling (for example, MAC (medium access control, medium access control) control element (MAC control element, MAC CE) signaling). Semi-persistent CSI reporting may alternatively be performed on a physical uplink shared channel (physical uplink shared channel, PUSCH) resource, and the base station activates and deactivates semi-persistent CSI reporting by using physical layer downlink control signaling (downlink control information, DCI).

For still another example, in aperiodic CSI reporting (aperiodic CSI reporting, AP-CSI), a base station first semi-statically configures a plurality of CSI reporting configuration parameters for UE by using downlink RRC signaling, and triggers one or more of the plurality of CSI reporting configuration parameters by using downlink control information DCI. The UE performs CSI measurement based on the CSI reporting configuration parameter, and uses a PUSCH to report a CSI measurement result. Although both aperiodic CSI measurement and/or reporting and semi-persistent CSI measurement and/or reporting need to be triggered by the base station, aperiodic CSI measurement and/or reporting do/does not need to be deactivated after being triggered by using the DCI, and measurement and/or reporting are/is performed only once. A CMR and an IMR used for aperiodic CSI reporting may be periodic, semi-persistent, or aperiodic.

In a possible implementation, content (for example, a quantity measurement quantity) reported in a CSI report is also referred to as a CSI measurement channel parameter, and includes but is not limited to the following types: a CSI-RS resource indicator (CSI-RS resource indicator, CRI), a rank indicator (rank indicator, RI), a PMI, a CQI, a layer indicator (layer indicator, LI), and the like. The CRI indicates a best CSI-RS resource indicator, and corresponds to a best beam. The RI indicates a quantity of transmission layers (based on the CRI). In a single-codeword (codeword) mode, a quantity of RIs ranges from 1 to 4. In a dual-codeword mode, a quantity of RIs ranges from 1 to 8. The PMI indicates a PMI recommended by the UE based on the RI. The CQI indicates that an appropriate coding and modulation scheme is obtained based on the PMI, and feedback is performed for each codeword. A value range of the CQI is 1 to 15. Each CQI corresponds to one modulation scheme and one code rate. For example, 64QAM and 256QAM are supported. The LI is a new concept introduced in NR. The LI indicates a column of a precoding matrix corresponding to a reported PMI, and the column corresponds to a strongest layer of a codeword with a large wideband CQI. The LI needs to be represented by using only two bits (bits).

(4) PMI estimation computation complexity analysis

In PMI estimation computation based on a Type II codebook, channel estimation and singular value decomposition (singular value decomposition, SVD) or eigen value decomposition (eigen value decomposition, EVD) are the key to determining PMI estimation computation complexity. Specifically, the PMI estimation computation complexity is related to a quantity of NZP CSI-RS ports (for example, a quantity of transmit antenna ports of a TRP that can be distinguished by UE). For a downlink channel matrix $\mathbf{H} \in \mathbb{C}^{M \times N}$, a quantity N of columns of $\mathbf{H}$ represents a quantity of transmit antenna ports of a TRP (where a maximum quantity is 32), and a quantity M of rows of $\mathbf{H}$ represents a quantity of receive antenna ports of the UE. Therefore, N determines computation complexity of channel estimation. In a possible implementation, computation complexity of SVD/EVD is related to a spatial dimension, and the spatial dimension is determined based on a quantity L of spatial beams. For example, a larger value of L indicates higher precision of a PMI and higher computation complexity of each time of SVD/EVD.

In a possible implementation, in NR, the TRP may simultaneously configure a plurality of times of CSI reporting, each time of CSI reporting may be bound to one CSI-RS resource set (CSI-RS resource set), and the CSI-RS resource set may include at least one CSI-RS resource. The UE may perform measurement and CSI reporting on the at least one CSI-RS resource. Therefore, a quantity of times of CSI reporting triggered by the TRP, a quantity of CSI-RS resources included in the CSI-RS resource set bound to the CSI reporting, and a quantity of ports on the CSI-RS resource all affect complexity of performing CSI channel estimation by the UE.

2. CSI-RS multiplexing manner

In a 5G NR technology, a CSI-RS of a single-antenna port occupies one resource element (resource element, RE). The CSI-RS supports a multi-antenna port in occupying a plurality of RE resources, and is multiplexed based on a code division multiplexing (code division multiplexing, CDM) code group. A multiplexing manner is similar to that of a physical downlink shared channel (physical downlink shared channel, PDSCH) DM-RS CDM group. For example, based on a quantity of multi-antenna ports, the multiplexing manner may be configured as: no code division multiplexing; two groups of code division multiplexing in frequency domain; two groups of multiplexing in frequency domain and two groups of multiplexing in time domain, that is, four groups of multiplexing in total; or two groups of multiplexing in frequency domain and four groups of multiplexing in time domain, that is, eight groups of multiplexing in total. It is assumed that a code group size is $L \in \{1, 2, 4, 8\}$. It may be determined that a quantity of code groups is N/L based on a configuration of a quantity of antenna ports. When a 6G antenna scale is expanded to 1024, resource overheads used for the CSI-RS are increased sharply. In addition, a quantity of codebooks fed back by using the PMI and calculation complexity of the PMI are also increased sharply.

II. Communication method provided in this application

FIG. 3 is a schematic flowchart of a communication method according to this application. The communication method is applied to the communication system shown in FIG. 1. For example, the communication method may be implemented through interaction between a first apparatus and a second apparatus. The first apparatus may be a terminal or an apparatus that can implement a function of a terminal, and the second apparatus may be a network device or an apparatus that can implement a function of a network device. The communication method includes the following steps.

S101: The second apparatus sends a reference signal, where a frequency domain position of the reference signal and a transmit antenna port corresponding to the frequency domain position are a combination of frequency domain position and transmit antenna port that corresponds to a first index in an arrangement matrix. Correspondingly, the first apparatus receives the reference signal.

The reference signal may include but is not limited to a CSI-RS, a channel sounding reference signal (sounding reference signal, SRS), a demodulation reference signal (demodulation reference signal, DMRS), and the like. In this application, the CSI-RS is mainly used as an example for description. The frequency domain position of the reference signal and the transmit antenna port corresponding to the frequency domain position are the combination of frequency domain position and transmit antenna port that corresponds to the first index in the arrangement matrix. That is, the reference signal may be a part of reference signals. For example, the part of reference signals occupy only a part of frequency domain positions and a part of transmit antenna ports (for example, occupy only the combination of frequency domain position and transmit antenna port that corresponds to the first index in the arrangement matrix) in all transmit antenna ports and all frequency domain positions, and the part of occupied frequency domain positions and the part of occupied transmit antenna ports are arranged unevenly in space formed by all the transmit antenna ports and all the frequency domain positions.

The arrangement matrix is obtained based on a first projection matrix and a first decomposition manner, and the first projection matrix is obtained based on a training matrix and a second decomposition manner. The training matrix is obtained by the second apparatus by training channel matrices of a plurality of time units. The plurality of time units may be a plurality of transmission time intervals (transport time interval, TTI) or slots (slot). In other words, the training matrix, the first projection matrix, and the arrangement matrix may be a plurality of matrices obtained by the second apparatus by training and decomposing the channel matrices of the plurality of time units. In a possible implementation, that the second apparatus trains and decomposes the channel matrices of the plurality of time units to obtain the training matrix, the first projection matrix, and the arrangement matrix may specifically include the following procedure.

(1) The second apparatus combines the channel matrices of the plurality of time units into a training matrix A.

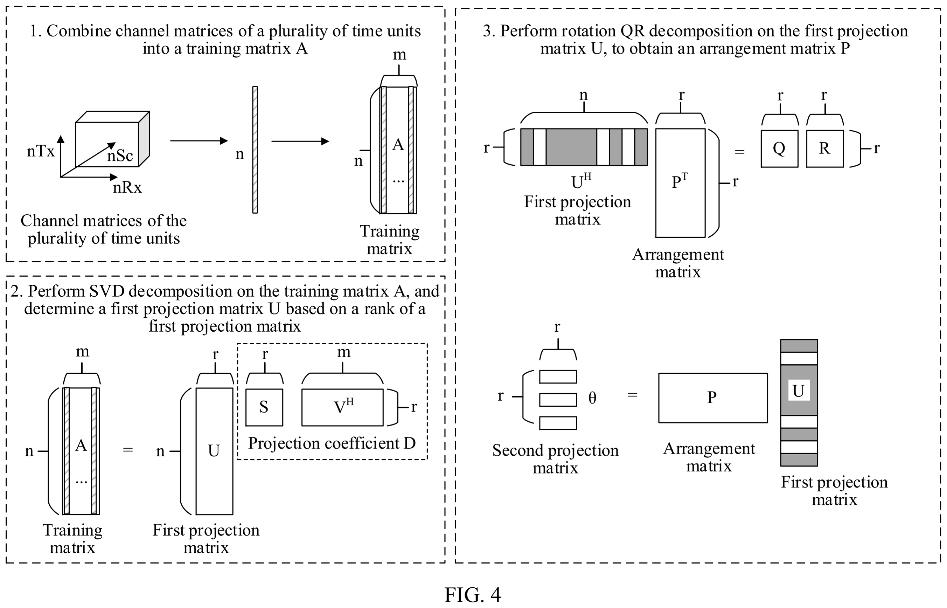

A dimension (size) of A may be represented as n*m, and n=nTx*nRx*nSc. nTx represents a quantity of transmit antenna ports, nRx represents a quantity of receive antenna ports, nSc represents a quantity of frequency domain units, a granularity of the frequency domain unit may be an RE, a resource block (resource block, RB), a resource block group (resource block group, RBG), or the like, and m represents a quantity of symbols or terminals. For example, FIG. 4 is a diagram of a training process of an arrangement matrix according to this application. The training matrix A in a first part is a two-dimensional training matrix. A column of the training matrix A includes information in three dimensions: the quantity of transmit antenna ports, the quantity of receive antenna ports, and a frequency domain resource. A row of the training matrix A includes the quantity of symbols or the quantity of terminals.

(2) The training matrix A is decomposed in the second decomposition manner, to obtain an intermediate matrix and a rank obtained through decomposition; and a column corresponding to the rank obtained through decomposition is selected from the intermediate matrix to obtain a first projection matrix U.

A dimension of the first projection matrix U may be represented as n*r, r represents a rank of the first projection matrix, a value of r may be predefined, r « n, and m > r. For example, in a second part in FIG. 4, the second apparatus performs truncated SVD decomposition on the training matrix A, to obtain the first projection matrix U and a projection coefficient C. $C = SV^*$, a dimension of S is r*r, and a dimension of V* is r*m. Optionally, the second decomposition manner is, for example, a singular value decomposition SVD or machine learning manner, and a final result is to obtain the first projection matrix. A specific decomposition manner is not limited in this application.

(3) The second apparatus decomposes the first projection matrix U in the first decomposition manner to obtain an arrangement matrix P.

A dimension of the arrangement matrix P may be represented as r*n. Because n=nTx*nRx*nSc (including three dimensions: the transmit antenna port, the receive antenna port, and the frequency domain position), a first index in the arrangement matrix P corresponds to a combination of the transmit antenna port, the receive antenna port, and the frequency domain position. For example, the first index in the arrangement matrix P corresponds to a $j^{th}$ receive antenna port, and a position of a received reference signal of a $k^{th}$ transmit antenna port at an $i^{th}$ frequency domain position, where i, j, and k are positive integers.

For example, the arrangement matrix P may be represented as $\begin{bmatrix} 0 & \cdots & 1 & \cdots & 0 & \cdots & 0 & \cdots & 0 \\ 0 & \cdots & 0 & \cdots & 1 & \cdots & 0 & \cdots & 0 \\ \vdots & \vdots & \vdots & \vdots & \vdots & \vdots & \vdots & \vdots & \vdots \\ 0 & \cdots & 0 & \cdots & 0 & \cdots & 1 & \cdots & 0 \end{bmatrix}$. In this embodiment, the first index in the arrangement matrix P represents an index whose value is 1 in the arrangement matrix P, and the combination of frequency domain position and transmit antenna port that corresponds to the first index indicates a combination of frequency domain position and transmit antenna port of the reference signal. Optionally, the first index in the arrangement matrix may alternatively be an index of another value. For example, it is assumed that values in the arrangement matrix P include 0 and 2 (or other non-zero values). In this case, the first index in the arrangement matrix represents an index whose value is 2 (that is, whose value is not 0) in the arrangement matrix P. Optionally, the first decomposition manner is, for example, an orthogonal triangular QR decomposition or machine learning manner, and a final result is to obtain the arrangement matrix. A specific decomposition manner is not limited in this application.

For example, a third part in FIG. 4 shows a process in which the second apparatus performs rotation QR decomposition on the first projection matrix U, for example, extracts linear-independent columns in a conjugate transpose matrix $U^H$ of the first projection matrix, and then rearranges these linear-independent columns to obtain the arrangement matrix P. In a possible implementation, the third part in FIG. 4 further shows a second projection matrix θ. The second projection matrix θ may be considered as a low-dimensional arrangement matrix, a dimension of θ may be represented as r*r, and θ = P * U. It can be learned that, according to the foregoing procedure, the second apparatus may determine the arrangement matrix, to determine a position of the reference signal.

In a possible implementation, the reference signal sent by the second apparatus may be specifically a reference signal (for example, the CSI-RS) sent by the second apparatus on a combination resource that is of the frequency domain position and the transmit antenna port and that corresponds to the first index in the arrangement matrix. For example, it is assumed that the second apparatus is an ORAN network element, and may send the reference signal through an O-RU.

In a possible implementation, before sending the reference signal, the second apparatus may further perform the following operations.

(1) The second apparatus determines a resource pattern of the reference signal based on the training matrix.

(2) The second apparatus maps a port in the resource pattern of the reference signal to a resource element in time domain and/or frequency domain.

The resource pattern of the reference signal includes one or more of the transmit antenna port, a time domain resource, and a frequency domain resource. The second apparatus may map the port (for example, the transmit antenna port) to the RE in time domain and/or frequency domain, to transmit the reference signal on a time-frequency domain resource. In a possible implementation, a mapping relationship between the reference signal pattern and a time-frequency domain position of the reference signal may be a mapping relationship between the reference signal pattern and the frequency domain position and a space domain position, or may be a mapping relationship between the reference signal pattern and a time domain position (where it is assumed that a space domain is in one-to-one correspondence with a time domain) and the frequency domain position.

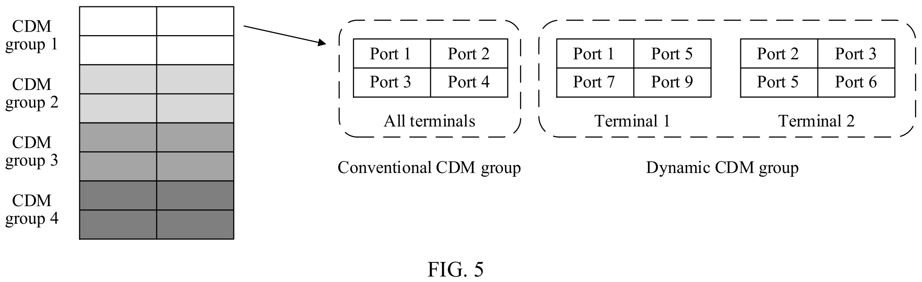

Optionally, when ports of a plurality of reference signals are mapped to a same RE in time domain and/or frequency domain, the second apparatus may map the ports to a CDM group in a dynamic/configurable manner. In other words, the second apparatus may map n transmit antenna ports to a same CDM group, and the n transmit antenna ports are configured for each terminal device (UE specific) and are dynamically configurable. For example, FIG. 5 is a diagram of a dynamic CDM group according to this application. In comparison with a conventional CDM group in which ports are fixed, in dynamic CDM, for different terminals, ports of reference signals of the terminals may be mapped to specified CDM groups, and ports that are of different terminals and that are mapped to a same CDM group may not be completely the same.

S102: The first apparatus sends a first channel matrix or a second channel matrix.

The first channel matrix includes a channel matrix on one or more groups of receive antenna ports corresponding to a combination of frequency domain position and transmit antenna port of the reference signal; and the second channel matrix is obtained by multiplying the first channel matrix by an inverse matrix of the second projection matrix. The combination of frequency domain position and transmit antenna port of the reference signal is known. The one or more groups of receive antenna ports may be receive antenna ports that are indicated by a base station to the terminal and that need to be fed back, or more than receive antenna ports (for example, a part of receive antenna ports) indicated by a base station, or all receive antenna ports.

In a possible implementation, that the first apparatus determines the first channel matrix and the second channel matrix based on a receive antenna port and the combination of frequency domain position and transmit antenna port that corresponds to the first index in the arrangement matrix may include the following procedure.

(1) The first apparatus determines that the combination of frequency domain position and transmit antenna port that corresponds to the first index in the arrangement matrix and a channel matrix on the receive antenna port that is indicated by the base station and that needs to be fed back by the first apparatus are the first channel matrix.

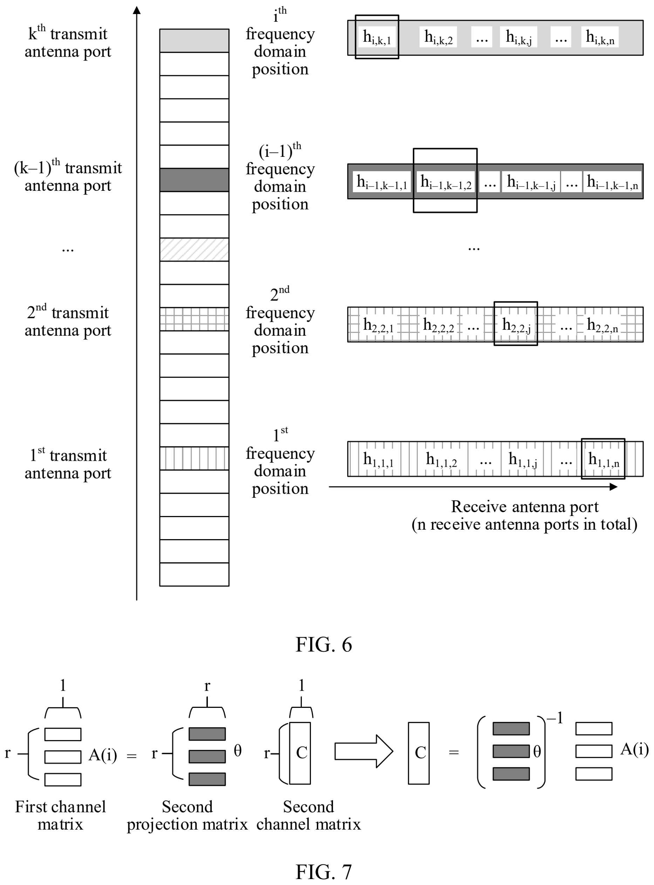

The combination of frequency domain position and transmit antenna port that corresponds to the first index (for example, the index whose value is 1 in the arrangement matrix) in the arrangement matrix and the channel matrix on the receive antenna port are a channel matrix on which the frequency domain position, the transmit antenna port, and the receive antenna port are paired (for example, a channel matrix on which an $i^{th}$ frequency domain position, a $k^{th}$ transmit antenna, and a $j^{th}$ receive antenna are paired). For example, FIG. 6 is a diagram of a relationship between a first channel matrix and a channel matrix on a transmit antenna port, a receive antenna port, and a frequency domain position according to this application. A horizontal coordinate represents the receive antenna port, and a vertical coordinate represents a combination of frequency domain position and transmit antenna port (where the frequency domain position is in one-to-one correspondence with the transmit antenna port, for example, a reference signal on the $k^{th}$ transmit antenna port is carried at the $i^{th}$ frequency domain position). For the first apparatus (where the first apparatus is a receive end), information fed back by the first apparatus to the second apparatus (where the second apparatus is a transmit end) may not include the transmit antenna port (where the frequency domain position is in one-to-one correspondence with the transmit antenna port, and the transmit antenna port is known to the transmit end). In the channel matrix on the receive antenna port and the frequency domain position shown in FIG. 6, the receive antenna port and the combination of frequency domain position and transmit antenna port that corresponds to the first index in the arrangement matrix are at positions of marked blocks. In other words, a channel matrix formed by the positions of the marked blocks are the first channel matrix.

(2) The first apparatus multiplies the first channel matrix by the inverse matrix of the second projection matrix, to obtain the second channel matrix.

The second channel matrix includes a channel matrix obtained by multiplying the first channel matrix by the inverse matrix of the second projection matrix, and a value in the second channel matrix obtained herein has only a mathematical meaning. For example, FIG. 7 is a diagram of a relationship between a first channel matrix and a second channel matrix according to this application. The first channel matrix is equal to a product of the second projection matrix and the second channel matrix. In other words, the second channel matrix is obtained by multiplying the first channel matrix by the inverse matrix of the second projection matrix.

In another possible implementation, that the first apparatus determines the first channel matrix and the second channel matrix based on a receive antenna port and the combination of frequency domain position and transmit antenna port that corresponds to the first index in the arrangement matrix may include the following procedure.

(1) The first apparatus determines that the combination of frequency domain position and transmit antenna port that corresponds to the first index in the arrangement matrix and a channel matrix on a part or all of receive antenna ports are the first channel matrix.

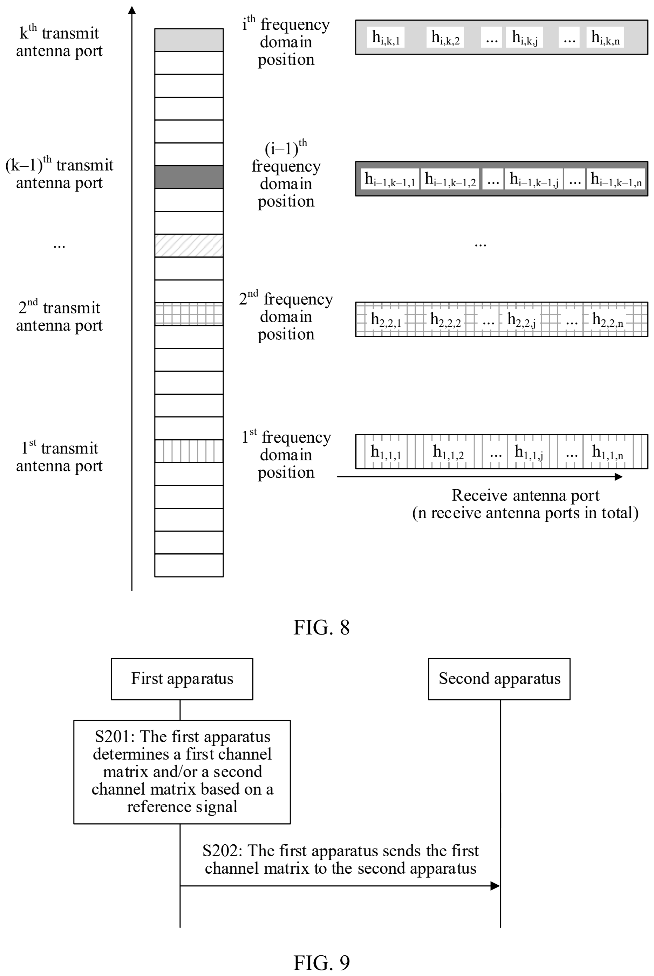

The combination of frequency domain position and transmit antenna port that corresponds to the first index (for example, the index whose value is 1 in the arrangement matrix) in the arrangement matrix and the channel matrix on the part or all of the receive antenna ports are a channel matrix on a part or all of receive antenna ports at the frequency domain position at which the reference signal is sent (for example, an $i^{th}$ frequency domain position, a $k^{th}$ transmit antenna, and the part or all of the receive antenna ports include a combination of the $i^{th}$ frequency domain position, the $k^{th}$ transmit antenna port, and a $1^{st}$ receive antenna port, ..., and a combination of the $i^{th}$ frequency domain position, the $k^{th}$ transmit antenna port, and an $n^{th}$ receive antenna port, where n is a positive integer). For example, FIG. 8 is another diagram of a relationship between a first channel matrix and a channel matrix on a transmit antenna port, a receive antenna port, and a frequency domain position according to this application. A horizontal coordinate represents the receive antenna port, and a vertical coordinate represents the frequency domain position. For the first apparatus (where the first apparatus is a receive end), information fed back by the first apparatus may not include the transmit antenna port; or the vertical coordinate in FIG. 8 may represent a combination of the frequency domain position and the transmit antenna port (where a transmit end is known). In channel matrices on all receive antenna ports at frequency domain positions shown in FIG. 8, channel matrices shown in FIG. 8 are the first channel matrix.

(2) The first apparatus multiplies the first channel matrix by the inverse matrix of the second projection matrix, to obtain the second channel matrix.

The second channel matrix includes a channel matrix that is on the receive antenna port and the frequency domain position and that is obtained by multiplying the first channel matrix by the inverse matrix of the second projection matrix. For a specific implementation, refer to the foregoing corresponding descriptions. Details are not described herein again.

In a possible implementation, after determining the first channel matrix, the first apparatus may send the first channel matrix to the second apparatus. The sending manner may be referred to as explicitly feeding back a channel matrix. That is, the first apparatus directly feeds back the channel matrix to the second apparatus. In another possible implementation, after determining the first channel matrix, the first apparatus multiplies the first channel matrix by the inverse matrix of the second projection matrix, to obtain the second channel matrix, and sends the second channel matrix to the second apparatus. The sending manner may be referred to as implicitly feeding back a channel matrix.

Optionally, after S102, the following step may be further included: The first apparatus reconstructs an entire downlink channel based on the first channel matrix or the second channel matrix. For example, the first apparatus may multiply a second channel matrix C by the first projection matrix U to obtain a reconstructed downlink channel

$$\widetilde{A(i)} = U * C.$$

In this embodiment, the reference signal received by the first apparatus may be a part of reference signals. This helps reduce pilot overheads for sending the reference signal. In addition, in comparison with a precoding matrix indicator feedback manner, in this method in which the first channel matrix or the second channel matrix is fed back by the first apparatus, less information is fed back (for example, only one channel matrix needs to be fed back), so that feedback overheads of the reference signal can be reduced.

III. The following describes in detail a specific procedure of S102.

After receiving the reference signal, the first apparatus may perform channel estimation on the reference signal, to obtain the first channel matrix or the second channel matrix.

Example 1: The first apparatus performs channel estimation based on the reference signal, to obtain and send the first channel matrix.

For example, FIG. 9 is a schematic flowchart of performing channel estimation by a first apparatus based on a reference signal, to obtain and send a first channel matrix according to this application. The following steps are included.

S201: The first apparatus determines the first channel matrix and/or a second channel matrix based on the reference signal.

For example, after receiving the reference signal, the first apparatus may determine a combination of frequency domain position and transmit antenna port that corresponds to a first index in an arrangement matrix. Therefore, the first apparatus determines the first channel matrix and the second channel matrix based on a receive antenna port and the combination of frequency domain position and transmit antenna port that corresponds to the first index in the arrangement matrix. For a specific implementation, refer to the foregoing descriptions. Details are not described herein again.

Optionally, after S201, the following steps are further included.

A second apparatus sends fourth information to the first apparatus, where the fourth information indicates a terminal device to feed back the first channel matrix or the second channel matrix. Correspondingly, the first apparatus receives the fourth information.

For example, a base station may preconfigure a CSI feedback manner for UE, for example, configure the UE to explicitly feed back a channel matrix or implicitly feed back a channel matrix. In this case, the UE may determine, based on the fourth information, to perform explicit feedback (for example, send the first channel matrix) or perform implicit feedback (for example, send the second channel matrix). Optionally, the fourth information may further indicate the terminal device to feed back a combination of receive antenna port and frequency domain position that corresponds to the first index in the arrangement matrix, or feed back channel matrices on all transmit antenna ports at the frequency domain position corresponding to the first index in the arrangement matrix.

S202: The first apparatus sends the first channel matrix to the second apparatus.

According to the descriptions in the foregoing embodiment, the first channel matrix may include the following two cases.

Case 1: The first channel matrix is determined based on one or more groups of receive antenna ports corresponding to the combination of frequency domain position and transmit antenna port that corresponds to the first index in the arrangement matrix. For example, in Case 1, the first channel matrix is represented as A(i), and a quantity of elements in A(i) is r, where r is a quantity of combinations of frequency domain position and transmit antenna port that correspond to the first index in the arrangement matrix, and a value of r is equal to a rank of a first projection matrix. The first channel matrix includes a combination of one or more groups of receive antenna ports at the frequency domain position of the reference signal, and any combination of receive antenna ports at the frequency domain position of the reference signal includes an $i^{th}$ frequency domain position, a $k^{th}$ transmit antenna port, and a $j^{th}$ receive antenna port, where i, j, and k are positive integers. For example, in Case 1, the first apparatus feeds back, to the second apparatus, a channel matrix on the one or more groups of receive antenna ports at an RE position in frequency domain, as shown in FIG. 6.

In a possible implementation, the base station may indicate, to the terminal device, an index of a receive antenna port that needs to be fed back. For example, the second apparatus sends second information to the first apparatus. Correspondingly, the first apparatus receives the second information, where the second information indicates the index of the receive antenna port that needs to be fed back. A position of the receive antenna port that needs to be fed back may be a position of a port on which a base station side sends the reference signal. Optionally, when the base station indicates, to the terminal device, the index of the receive antenna port that needs to be fed back, the terminal device may feed back the combination of frequency domain position and transmit antenna port that corresponds to the first index and a channel matrix on the receive antenna port that needs to be fed back, or may feed back the combination of frequency domain position and transmit antenna port that corresponds to the first index and channel matrices on more receive antenna ports. This is not limited in this application.

Case 2: The first channel matrix is determined based on the combination of frequency domain position and transmit antenna port that corresponds to the first index in the arrangement matrix and a part or all of receive antenna ports. For example, in Case 2, a quantity of elements in a first channel matrix A(i) is r*n, where r is a quantity of combinations of frequency domain position and transmit antenna port that correspond to the first index in the arrangement matrix, a value of r is equal to a rank of a first projection matrix, and n is a quantity of the part or all of the receive antenna ports. For example, in Case 2, the first apparatus feeds back, to the second apparatus, a channel matrix on the part or all of the receive antenna ports at an RE position in frequency domain (for example, channel matrices on a $1^{st}$ receive antenna port to an $n^{th}$ receive antenna port at an RE position in frequency domain), as shown in FIG. 8.

Optionally, in Case 2, because a combination of the part or all of the receive antenna ports at the frequency domain position at which the reference signal is sent is fed back, the second apparatus does not need to indicate, to the first apparatus, a position of a receive antenna port that needs to be fed back.

In Example 1, after performing channel estimation, the terminal performs explicit CSI feedback, that is, directly feeds back the first channel matrix obtained through channel estimation. The explicit CSI feedback in Example 1 includes two cases: feeding back a channel matrix on an indicated receive antenna port and an indicated frequency domain position, or feeding back a channel matrix on the part or all of the receive antenna ports and the frequency domain position. In comparison with Case 2, in Case 1, fewer channel matrices need to be fed back, but a part of air interface resources need to indicate the index of the receive antenna port. In comparison with an existing 5G NR solution, in Case 1 and Case 2, fewer CSI-RS pilot overheads are needed, and less information needs to be fed back. This helps reduce feedback overheads.

Example 2: The first apparatus performs channel estimation based on the reference signal, and sends the first channel matrix.

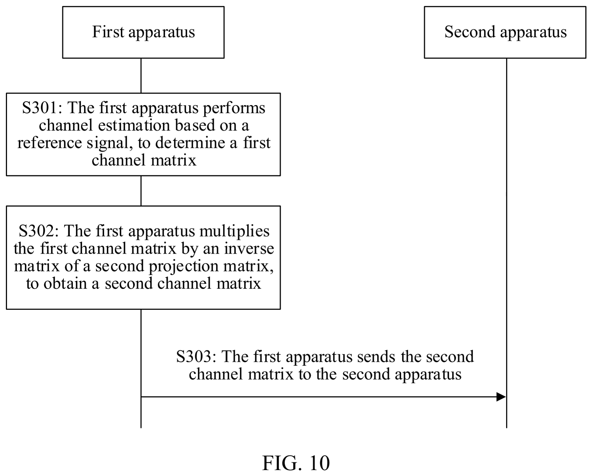

For example, FIG. 10 is another schematic flowchart of performing channel estimation by a first apparatus based on a reference signal, to obtain and send a first channel matrix according to this application. The following steps are included.

S301: The first apparatus performs channel estimation based on the reference signal, to determine the first channel matrix.

For a specific implementation of S301, refer to corresponding descriptions in S201 and descriptions of optional steps. Details are not described herein again.

S302: The first apparatus multiplies the first channel matrix by an inverse matrix of a second projection matrix, to obtain a second channel matrix.

The second channel matrix includes a channel matrix that is on a receive antenna port and a frequency domain position and that is obtained by multiplying the first channel matrix by the inverse matrix of the second projection matrix. A relationship between the first channel matrix and the second channel matrix is shown in FIG. 7.

Optionally, before S302, the following steps are further included.

A second apparatus sends third information to the first apparatus. Correspondingly, the first apparatus receives the third information, where the third information indicates the second projection matrix.

For example, a base station indicates the second projection matrix to a terminal by using control signaling (for example, RRC/a MAC CE/DCI) or the like. It may be understood that, in comparison with a first projection matrix, the second projection matrix is a low-dimensional projection matrix, and includes less information. This helps reduce calculation overheads when the second projection matrix participates in calculation.

In a possible implementation, the third information includes a second projection matrix $\theta$. For example, the base station may send the second projection matrix $\theta$ to the terminal, and the terminal may directly use the second projection matrix $\theta$ to perform calculation.

In a possible implementation, the third information includes an arrangement matrix P. For example, the terminal knows a first projection matrix U, the base station may send the arrangement matrix to the terminal, and the terminal may multiply the arrangement matrix P by the first projection matrix U to obtain the second projection matrix $\theta$. The terminal may subsequently use the second projection matrix $\theta$ to perform calculation.

In a possible implementation, the third information includes a first index in the arrangement matrix. For example, if the terminal knows sizes of the first projection matrix U and the arrangement matrix P, the base station may indicate only the first index in the arrangement matrix, and the terminal may determine the second projection matrix $\theta$ based on an index value. The terminal may subsequently use the second projection matrix $\theta$ to perform calculation.

Optionally, the second projection matrix may be further trained and reported by the terminal. For example, if the terminal knows the first projection matrix U and the arrangement matrix P, the terminal may perform training based on the first projection matrix U and the arrangement matrix P to obtain the second projection matrix $\theta$.

S303: The first apparatus sends the second channel matrix to the second apparatus.

According to the descriptions in the foregoing embodiment, the second channel matrix includes the channel matrix that is on the receive antenna port and the frequency domain position and that is obtained by multiplying the first channel matrix by the inverse matrix of the second projection matrix. Specifically, the second channel matrix may include the following two cases.

Case 1: When the first channel matrix is a channel matrix at a first position in the arrangement matrix, and a quantity of elements in a first channel matrix $A(i)$ is r, a quantity of elements in a second channel matrix C is r. For example, in Case 1, the first apparatus feeds back, to the second apparatus, a coefficient corresponding to a channel matrix on one or more groups of receive antenna ports at an RE position in frequency domain.

In a possible implementation, when the terminal device feeds back a combination that is of a receive antenna port and a frequency domain position and that corresponds to the first index in the arrangement matrix, the base station needs to indicate, to the terminal device, a position of a receive antenna port that needs to be fed back. For a specific implementation, refer to corresponding descriptions in Example 1. Details are not described herein again.

Case 2: When the first channel matrix includes a combination of a part or all of receive antenna ports at the frequency domain position at which the reference signal is sent, and a quantity of elements in a first channel matrix $A(i)$ is r*n, a quantity of elements in a second channel matrix C is r*n. For example, in Case 2, the first apparatus feeds back, to the second apparatus, a coefficient corresponding to a channel matrix on the part or all of the receive antenna ports at an RE position in frequency domain (for example, coefficients corresponding to channel matrices on a 1st receive antenna port to an nth receive antenna port at an RE position in frequency domain).

Optionally, in Case 2, because the combination of the part or all of the receive antenna ports at the frequency domain position at which the reference signal is sent is fed back, the second apparatus does not need to indicate, to the first apparatus, a position of a receive antenna port that needs to be fed back.

In Example 2, after performing channel estimation, the terminal performs implicit CSI feedback, that is, feeds back the second channel matrix. The implicit CSI feedback in Example 2 includes two cases: feeding back a coefficient corresponding to a channel matrix on an indicated receive antenna port and an indicated frequency domain position, or feeding back a coefficient corresponding to a channel matrix on the part or all of the receive antenna ports and the frequency domain position. In comparison with Case 2, in Case 1, fewer channel matrices need to be fed back, but a part of air interface resources need to indicate an index of the receive antenna port. In comparison with an existing 5G NR solution, in Case 1 and Case 2, fewer CSI-RS pilot overheads are needed, and less information needs to be fed back. This helps reduce feedback overheads.

IV. When there is only one or a few ports on a same frequency domain resource, a base station needs to perform CDM to increase transmit power.

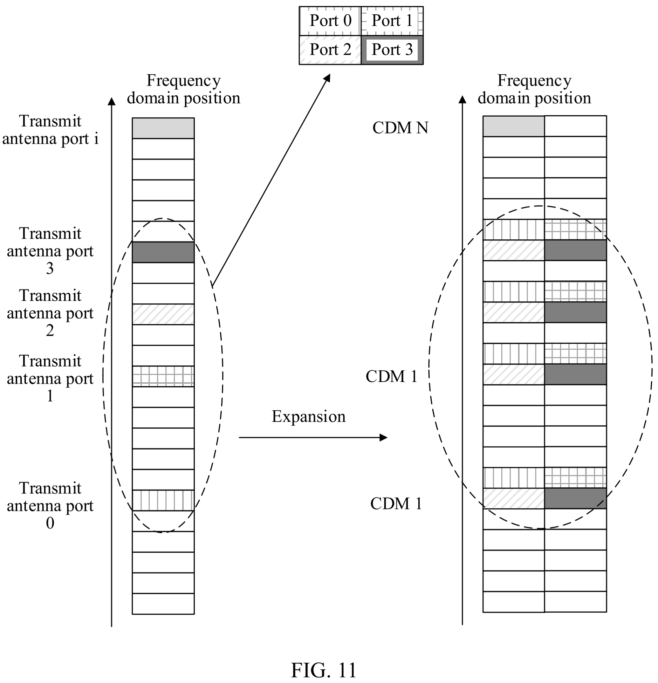

For example, FIG. 11 is a diagram of performing CDM to increase transmit power on a CSI-RS port according to this application. As shown in a left part of FIG. 11, a few CSI-RS ports are mapped to a frequency domain resource (for example, there is only one CSI-RS port on each frequency domain RE). In this case, a channel estimation result obtained by performing channel estimation based on a CSI-RS may be inaccurate. Therefore, this application proposes that CDM may be performed on the CSI-RS port on each frequency domain RE to improve channel estimation quality. For example, as shown in a right part of FIG. 11, a quantity of CSI-RS ports mapped to each frequency domain RE is expanded from 1 to 4, and the four ports belong to a same CDM group. After the expansion, four CSI-RS ports are mapped to each frequency domain RE, and CDM may be performed to improve the channel estimation quality.

In a possible implementation, a first apparatus may perform channel estimation based on an expanded CSI-RS. For example, for channels (whose frequency domain features are consistent) corresponding to a plurality of CSI-RSs at a same frequency domain position, UE may perform channel estimation by using a spatial filter.

In a possible implementation, after the first apparatus performs channel estimation on a CSI-RS after CDM is performed, a UE side may perform a de-CDM operation, to obtain a needed channel matrix on a specified port and in frequency domain (for example, to obtain a channel matrix on a CSI-RS port before CDM is performed). For a de-CDM operation performed by the UE side, refer to an existing de-CDM operation. This is not limited in this application.

In a possible implementation, that the first apparatus sends a first channel matrix or a second channel matrix to a second apparatus includes: The first apparatus sends, to the second apparatus, a channel matrix that is on the specified port and in frequency domain and that is obtained through de-CDM. The channel matrix that is on the specified port and in frequency domain and that is obtained through de-CDM may be a channel matrix at a position whose value is 1 in an arrangement matrix, or may include a combination of a part or all of receive antenna ports at a frequency domain position at which a reference signal is sent. For a specific implementation, refer to corresponding descriptions in the third part. Details are not described herein again.

In this embodiment, when transmit power is low and a channel estimation effect is poor because there is only one or a few ports on a same frequency domain resource, CDM may be manually performed on a CSI-RS port that needs to be sounded in frequency domain, to improve an SNR, so as to improve the channel estimation effect. In addition, the UE side may perform a de-CDM operation to obtain the needed channel matrix.

V. Channel estimation is performed in a simplified manner for a feature of a reference signal.

Because a reference signal received by a first apparatus has a feature of a part of reference signals (for example, the reference signal occupies only a part of frequency domain positions and a part of transmit antenna ports in all transmit antenna ports and all frequency domain positions), the first apparatus may perform channel estimation on the reference signal in the simplified manner. For example, that the first apparatus performs channel estimation on the reference signal may include but is not limited to the following manners.

Manner 1: The first apparatus performs channel estimation on reference signals at different frequency domain positions by using a single sequence, where the frequency domain position of the reference signal and a transmit antenna port are determined based on a combination of frequency domain position and transmit antenna port that corresponds to a first index in an arrangement matrix. For example, UE may estimate REs of CSI-RSs in frequency domain by using a single sequence (a port corresponding to each sequence may be inconsistent, but the single sequence may be used).

Manner 2: The first apparatus performs channel estimation on reference signals at different frequency domain positions by using a plurality of filters. For example, filters used at different frequency domain positions may be different, and UE may estimate REs of CSI-RSs in frequency domain by using different filters.

Manner 3: The first apparatus performs channel estimation on reference signals at a same frequency domain position by using a spatial filter. For example, UE may perform spatial filtering on a reference signal on a port, to estimate REs of CSI-RSs at the same frequency domain position.

In a possible implementation, the first apparatus estimates REs of reference signals at a same frequency domain position or different frequency domain positions, to determine the receive antenna port and a combination of frequency domain position and transmit antenna port, and determine a first channel matrix. For specific descriptions of the first channel matrix, refer to corresponding descriptions in S102. Details are not described herein again. In other words, this embodiment may be applied to embodiments shown in FIG. 3, FIG. 9, and FIG. 10.

VI. The following analyzes performance of the communication method provided in this application.

For example, Table 1 is a link simulation parameter table corresponding to the communication method provided in this application. In this application, it is assumed that a 3GPP CDL-A channel model is used, and a simulation scenario is configured with reference to Table 1. It should be noted that, an example in which a reference signal in the following simulation analysis is a CSI-RS is used.

Table 1: Link simulation parameter table

| Simulation parameters<br>simulation parameters | |
|---|---|
| Parameters<br>parameters | Values<br>values |
| Scenarios<br>scenarios | One network device and one terminal device 1 gNB and 1 UE |
| Channel model<br>channel model | Refer to a CDL-A-100 ns channel model in 3GPP 38.901 |
| Carrier frequency<br>carrier frequency | 10 GHz, 30 kHz scs |
| Bandwidth<br>bandwidth | 16 RBs |
| Channel assumption<br>channel assumption | Non-line-of-sight propagation (non-line-of-sight propagation, NLOS) channel |
| Receive antenna port configuration UE antenna config | 32: (M, N, P)=(4, 4, 2); (dH, dV)=(0.5, 0.5)$\lambda$ |
| Transmit antenna port configuration gNB antenna config | 1024: (M, N, P)=(8, 64, 2); (dH, dV)=(0.5, 0.5)$\lambda$ |
| Standard channel<br>standard channel | 460 paths (path): 23 clusters (cluster) and 20 rays (ray) |
| Terminal moving speed UE speed | 3 kilometers per hour (km/h) |
| Quantity of terminals UE number | 1 |
| Quantity of CSI-RS ports | 1024 |
| CSI-RS signal-to-noise ratio CSI-RS SNR | 20 dB |
| CSI-RS time unit<br>CSI-RS period | 10 TTIs |
| CSI-RS channel estimation CSI-RS channel estimation | Real channel estimation (real channel estimation, RCE) |
| Downlink (downlink, DL) signal-to-noise ratio DL SNR | 20 dB |
| Quantity of downlink transmission layers DL transmission layer number | 32 |
| SRS channel estimation<br>SRS channel estimation | Ideal channel estimation (ideal channel estimation, ICE) |

For simulation in this application, it is assumed that: A UE side performs real channel estimation; CDM is performed in a time dimension to implement port multiplexing; channel estimation is performed by using a related algorithm; a real difference algorithm is used; and an ideal CSI feedback is considered.

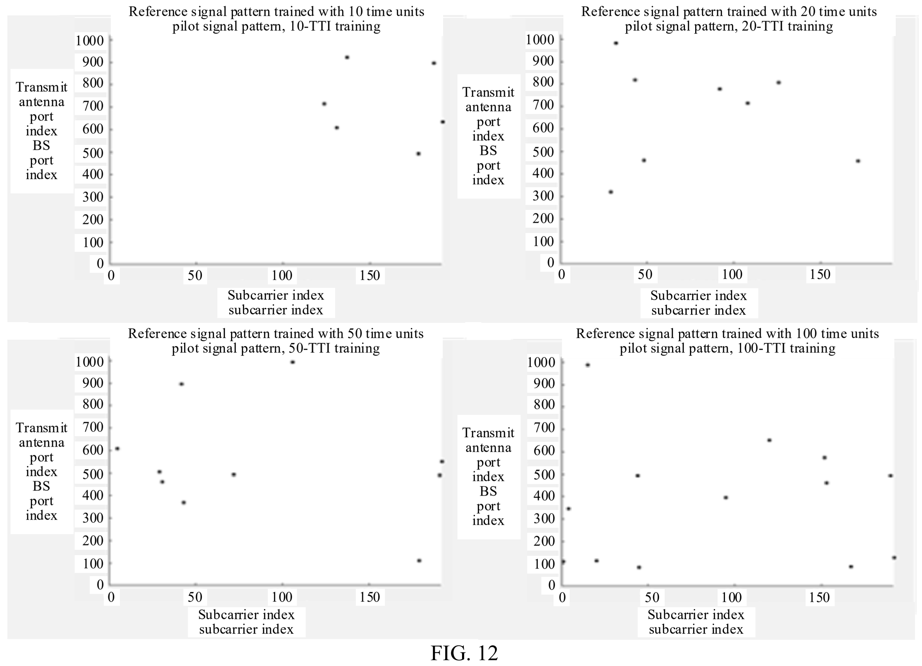

For example, FIG. 12 is a diagram of simulation of reference signal patterns trained in different TTIs according to this application. In a simulation condition and a simulation channel shown in Table 1, the reference signal patterns trained by using different TTIs in the communication method provided in this application are shown in FIG. 12. It can be learned from FIG. 12 that the reference signal patterns obtained through training according to the communication method provided in this application occupy only a part of frequency domain positions and transmit antenna ports. This helps reduce pilot overheads for sending a reference signal.

For example, Table 2 is a comparison table of RE resource overheads for training reference signals by using channels in different TTIs according to this application.

Table 2: Comparison table of RE resource overheads for training reference signals by using channels in different TTIs

| Solution that is used | RE resource overhead (absolute value) RE cost (absolute value) | RE resource overhead (relative value) RE cost (relative value) |
|---|---|---|
| Existing 5G solution | 32*16 | 100% |
| Training design in 10 time units training design in 10 TTIs | 6 | 1.17% |
| Training design in 20 time units training design in 20 TTIs | 8 | 1.56% |
| Training design in 50 time units training design in 50 TTIs | 10 | 1.95% |
| Training design in 100 time units training design in 100 TTIs | 13 | 2.54% |

It can be learned from Table 2 that, in comparison with the existing 5G solution, in the communication method provided in this application in which the reference signal pattern is obtained through training, the RE resource overheads can be significantly reduced.

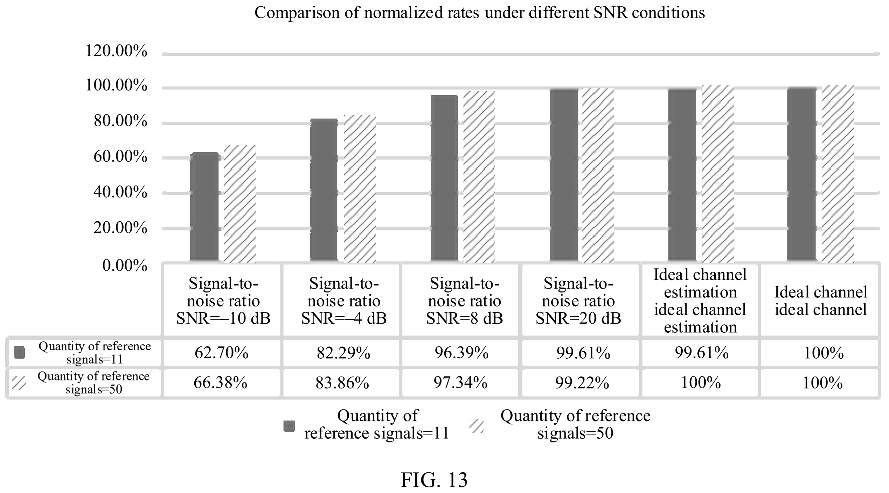

For example, FIG. 13 is a diagram of simulation of a downlink average rate obtained after channel estimation is performed by using reference signals obtained through training in 100 TTIs in different SNRs in a communication method according to this application. It can be learned from FIG. 13 that, in comparison with an existing 5G-NR solution, pilot overheads are reduced to less than 3%. In addition, under a high SNR condition, an effect of using the reference signal sounding solution provided in this application is good, and a difference from a normalized average rate in an ideal channel condition is less than 1%.

To implement functions in the method provided in this application, an apparatus or a device provided in this application may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions. Division into modules in this application is an example, and is merely logical function division. During actual implementation, there may be another division manner. In addition, functional modules in embodiments of this application may be integrated into one processor, or may exist alone physically, or two or more modules may be integrated into one module. The integrated module may be implemented in a form of hardware, or may be implemented in a form of a software functional module.

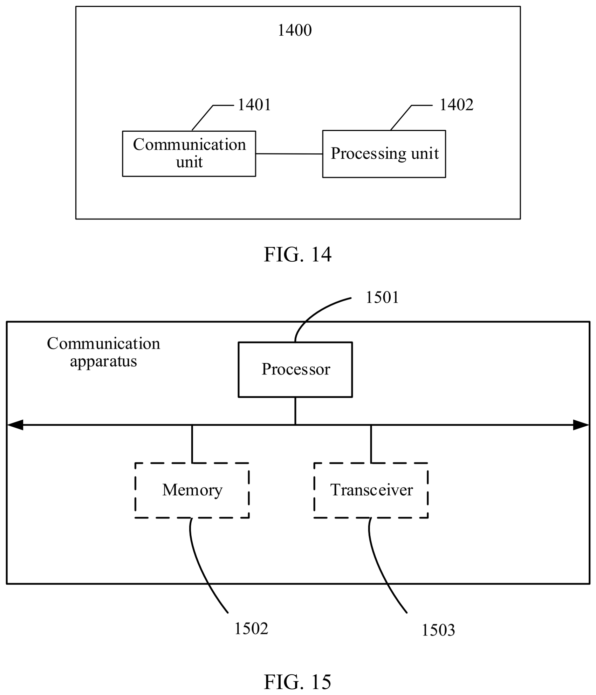

FIG. 14 is a diagram of a communication apparatus according to this application. The apparatus may include modules that are in one-to-one correspondence with the methods/operations/steps/actions described in any embodiment shown in FIG. 3 to FIG. 11. The module may be implemented by using a hardware circuit, software, or a combination of a hardware circuit and software.

The apparatus 1400 includes a communication unit 1401 and a processing unit 1402, configured to implement the method performed by each device in the foregoing embodiments. The communication unit 1401 is also referred to as a transceiver unit. The transceiver unit includes a sending unit and a receiving unit. The sending unit is configured to send a signal, and the receiving unit is configured to receive a signal.

In a possible implementation, the apparatus is a terminal, or is located in a terminal. Specifically, the communication unit 1401 is configured to receive a reference signal, where a frequency domain position of the reference signal and a transmit antenna port corresponding to the frequency domain position are a combination of frequency domain position and transmit antenna port that corresponds to a first index in an arrangement matrix, the arrangement matrix is obtained by decomposing a first projection matrix, and the first projection matrix is determined by performing singular value decomposition on a training matrix and based on a rank obtained through singular value decomposition. The communication unit 1401 is further configured to send a first channel matrix or a second channel matrix, where the first channel matrix is determined based on a receive antenna port and the combination of frequency domain position and transmit antenna port that corresponds to the first index in the arrangement matrix, the second channel matrix is determined based on the first channel matrix and a second projection matrix, and the second projection matrix is determined based on the arrangement matrix and the first projection matrix or is indicated by a second apparatus.

For specific execution procedures of the communication unit 1401 and the processing unit 1402 in this implementation, refer to descriptions of the steps performed by the terminal in the foregoing method embodiments and related descriptions. Details are not described herein again. In the communication method implemented by the apparatus, the received reference signal may be a part of reference signals. This helps reduce pilot overheads for sending the reference signal. In addition, in comparison with a precoding matrix indicator feedback manner, in this method in which the first channel matrix or the second channel matrix is fed back, less information is fed back (for example, only one channel matrix needs to be fed back), so that feedback overheads of the reference signal can be reduced.

In a possible implementation, the apparatus is a network device, or is located in a network device. Specifically, the communication unit 1401 is configured to send a reference signal, where a frequency domain position of the reference signal and a transmit antenna port corresponding to the frequency domain position are a combination of frequency domain position and transmit antenna port that corresponds to a first index in an arrangement matrix, the arrangement matrix is obtained by decomposing a first projection matrix, and the first projection matrix is determined by performing singular value decomposition on a training matrix and based on a rank obtained through singular value decomposition. The communication unit 1401 is further configured to receive a first channel matrix or a second channel matrix, where the first channel matrix is determined based on a receive antenna port and the combination of frequency domain position and transmit antenna port that corresponds to the first index in the arrangement matrix, the second channel matrix is determined based on the first channel matrix and a second projection matrix, and the second projection matrix is determined based on the arrangement matrix and the first projection matrix or is indicated by a second apparatus.

For specific execution procedures of the communication unit 1401 and the processing unit 1402 in this implementation, refer to descriptions of the steps performed by the network device in the foregoing method embodiments and related descriptions. Details are not described herein again. In the communication method implemented by the apparatus, only a part of frequency domain positions and transmit antenna ports may be occupied to send the reference signal, to reduce pilot overheads for sending the reference signal. In addition, in comparison with a precoding matrix indicator feedback manner, in this method in which the first channel matrix or the second channel matrix is fed back, less information is fed back (for example, only one channel matrix needs to be fed back). This helps reduce feedback overheads of the reference signal.

In a possible implementation, when the communication apparatus is a chip, the chip includes a transceiver unit and a processing unit. The transceiver unit may be an input/output circuit or a communication interface. The processing unit is a processor, a microprocessor, an integrated circuit, or a logic circuit integrated on the chip.

This application further provides a communication apparatus. FIG. 15 is a diagram of another structure of a communication apparatus according to an embodiment of this application. The communication apparatus may be configured to perform the steps performed by the network device or the terminal in the foregoing method embodiments. For details, refer to related descriptions in the foregoing method embodiments.

The communication apparatus includes a processor 1501. Optionally, the communication apparatus further includes a memory 1502 and a transceiver 1503.

In a possible implementation, the processor 1501, the memory 1502, and the transceiver 1503 are separately connected through a bus, and the memory stores computer instructions.

Optionally, the processing unit 1402 in the foregoing embodiment may be specifically the processor 1501 in this embodiment. Therefore, specific implementation of the processor 1501 is not described again. The communication unit 1401 in the foregoing embodiment may be specifically the transceiver 1503 in this embodiment. Therefore, specific implementation of the transceiver 1503 is not described again.

In this application, the processor may be a general-purpose processor, a digital signal processor, an application-specific integrated circuit, a field programmable gate array or another programmable logic device, a discrete gate or a transistor logic device, or a discrete hardware component, and may implement or perform methods, steps, and logical block diagrams that are disclosed in this application. The general-purpose processor may be a microprocessor or any conventional processor or the like. The steps of the methods disclosed with reference to this application may be directly performed and completed by a hardware processor, or may be performed and completed by a combination of hardware and a software module in the processor.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of instructions or a data structure and that can be accessed by a computer, but is not limited thereto. The memory in this application may alternatively be a circuit or any other apparatus that can implement a storage function, and is configured to store program instructions and/or data.

This application provides another communication apparatus. The device includes a processor and an interface. Optionally, the device further includes a memory. The processor is coupled to the memory. The processor is configured to read and execute computer instructions stored in the memory, to implement the communication method in embodiments shown in FIG. 3 to FIG. 11.

An embodiment of this application further provides a communication system. The communication system includes a first apparatus and a second apparatus. The first communication apparatus is configured to perform all or a part of the steps performed by the first apparatus in the foregoing embodiments. The second apparatus is configured to perform all or a part of the steps performed by the second apparatus in the foregoing embodiments.

This application provides a computer-readable storage medium. The computer-readable storage medium stores a program or instructions. When the program or the instructions are run on a computer, the computer is caused to perform the communication method in embodiments shown in FIG. 3 to FIG. 11.

This application provides a computer program product. The computer program product includes instructions. When the instructions are run on a computer, the computer is caused to perform the communication method in embodiments shown in FIG. 3 to FIG. 11.

This application provides a chip or a chip system. The chip or the chip system includes at least one processor and an interface. The interface and the at least one processor are interconnected through a line. The at least one processor is configured to run a computer program or instructions, to perform the communication method in embodiments shown in FIG. 3 to FIG. 11.

The interface in the chip may be an input/output interface, a pin, a circuit, or the like.

The chip system may be a system on chip (system on chip, SoC), a baseband chip, or the like. The baseband chip may include a processor, a channel encoder, a digital signal processor, a modem, an interface module, and the like.

In an implementation, the chip or the chip system described above in this application further includes at least one memory, and the at least one memory stores instructions. The memory may be a storage unit inside the chip, for example, a register or a cache, or may be a storage unit (for example, a read-only memory or a random access memory) of the chip.

All or a part of the technical solutions provided in this application may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, a network device, a terminal, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this application, on a premise that there is no logical contradiction, mutual reference may be made between embodiments. For example, mutual reference may be made between methods and/or terms in method embodiments, mutual reference may be made between functions and/or terms in apparatus embodiments, and mutual reference may be made between functions and/or terms in apparatus embodiments and method embodiments.

It is clear that a person skilled in the art can make various modifications and variations to this application without departing from the scope of this application. Therefore, this application is intended to cover these modifications and variations of this application provided that they fall within the scope of the claims of this application and equivalent technologies thereof.

## Claims

1.   A communication method, comprising:

receiving a reference signal, wherein a frequency domain position of the reference signal and a transmit antenna port corresponding to the frequency domain position are a combination of frequency domain position and transmit antenna port that corresponds to a first index in an arrangement matrix, the arrangement matrix is obtained based on a first projection matrix and a first decomposition manner, and the first projection matrix is obtained based on a training matrix and a second decomposition manner; and

sending a first channel matrix or a second channel matrix, wherein the first channel matrix is determined based on a receive antenna port and the combination of frequency domain position and transmit antenna port that corresponds to the first index in the arrangement matrix, the second channel matrix is determined based on the first channel matrix and a second projection matrix, and the second projection matrix is determined based on the arrangement matrix and the first projection matrix or is indicated by a second apparatus.

2. The method according to claim 1, wherein the first channel matrix comprises a channel matrix on one or more groups of receive antenna ports corresponding to the combination of frequency domain position and transmit antenna port of the reference signal; and

the second channel matrix is obtained by multiplying the first channel matrix by an inverse matrix of the second projection matrix.

3. The method according to claim 2, wherein a quantity of elements in the first channel matrix or a quantity of elements in the second channel matrix is r, wherein r is a quantity of combinations of frequency domain position and transmit antenna port that correspond to the first index in the arrangement matrix.

4. The method according to claim 2 or 3, wherein the method further comprises:

receiving second information, wherein the second information indicates an index of a receive antenna port that needs to be fed back by a first apparatus; and

the first channel matrix comprises a channel matrix on the receive antenna port that needs to be fed back and that corresponds to the combination of frequency domain position and transmit antenna port of the reference signal.

5. The method according to claim 2, wherein the first channel matrix comprises a channel matrix on a part or all of receive antenna ports corresponding to the combination of frequency domain position and transmit antenna port of the reference signal.

6. The method according to claim 5, wherein a quantity of elements in the first channel matrix or a quantity of elements in the second channel matrix is r*n, wherein r is a quantity of combinations of frequency domain position and transmit antenna port that correspond to the first index in the arrangement matrix, and n is a quantity of the part or all of the receive antenna ports.

7. The method according to any one of claims 1 to 6, wherein the method further comprises:

receiving third information, wherein the third information comprises the second projection matrix; or the third information comprises and indicates the second projection matrix.

8. The method according to any one of claims 1 to 7, wherein the method further comprises:
receiving fourth information, wherein the fourth information indicates the first apparatus to feed back the first channel matrix or the second channel matrix.

9. A communication method, comprising:

sending a reference signal, wherein a frequency domain position of the reference signal and a transmit antenna port corresponding to the frequency domain position are a combination of frequency domain position and transmit antenna port that corresponds to a first index in an arrangement matrix, the arrangement matrix is obtained based on a first projection matrix and a first decomposition manner, and the first projection matrix is obtained based on a training matrix and a second decomposition manner; and

receiving a first channel matrix or a second channel matrix, wherein the first channel matrix is determined based on a receive antenna port and the combination of frequency domain position and transmit antenna port that corresponds to the first index in the arrangement matrix, the second channel matrix is determined based on the first channel matrix and a second projection matrix, and the second projection matrix is determined based on the arrangement matrix and the first projection matrix or is indicated by a second apparatus.

10. The method according to claim 9, wherein the first channel matrix comprises a channel matrix on one or more groups of receive antenna ports corresponding to the combination of frequency domain position and transmit antenna port of the reference signal; and

the second channel matrix is obtained by multiplying the first channel matrix by an inverse matrix of the second projection matrix.

11. The method according to claim 10, wherein a quantity of elements in the first channel matrix or a quantity of elements in the second channel matrix is r, wherein r is a quantity of combinations of frequency domain position and transmit antenna port that correspond to the first index in the arrangement matrix.

12. The method according to claim 10 or 11, wherein the method further comprises:

sending second information, wherein the second information indicates an index of a receive antenna port that needs to be fed back by a first apparatus; and
the first channel matrix comprises a channel matrix on the receive antenna port that needs to be fed back and that corresponds to the combination of frequency domain position and transmit antenna port of the reference signal.

13. The method according to claim 10, wherein the first channel matrix comprises a channel matrix on a part or all of receive antenna ports corresponding to the combination of frequency domain position and transmit antenna port of the reference signal.

14. The method according to claim 13, wherein a quantity of elements in the first channel matrix or a quantity of elements in the second channel matrix is r*n, wherein r is a quantity of combinations of frequency domain position and transmit antenna port that correspond to the first index in the arrangement matrix, and n is a quantity of the part or all of the receive antenna ports.

15. The method according to any one of claims 9 to 14, wherein the method further comprises:

sending third information, wherein the third information comprises the second projection matrix; or
the third information indicates the second projection matrix.

16. The method according to any one of claims 9 to 15, wherein that the first projection matrix is obtained based on the training matrix and the second decomposition manner comprises:

decomposing the training matrix in the second decomposition manner, to obtain an intermediate matrix and a rank obtained through decomposition; and
selecting, from the intermediate matrix, a column corresponding to the rank obtained through decomposition to obtain the first projection matrix.

17. The method according to any one of claims 9 to 16, wherein the method further comprises:

determining a resource pattern of the reference signal based on the training matrix; and
mapping a port in the resource pattern of the reference signal to a resource element in time domain and/or frequency domain.

18. The method according to claim 17, wherein the mapping the port in the resource pattern to the resource element in time domain and/or frequency domain based on the resource pattern comprises:

mapping n transmit antenna ports to a same code division multiplexing group, wherein
the n transmit antenna ports are configured for each terminal device and are dynamically configurable.

19. The method according to any one of claims 9 to 18, wherein the method further comprises:
sending fourth information, wherein the fourth information indicates the terminal device to feed back the first channel matrix or the second channel matrix.

20. A communication apparatus, comprising a communication unit and a processing unit, wherein the communication unit and the processing unit are configured to perform the method according to any one of claims 1 to 8 or claims 9 to 19.

21. A communication apparatus, comprising a processor and a memory, wherein the memory is configured to store instructions, and when the instructions are executed by the processor, the communication apparatus is caused to perform the method according to any one of claims 1 to 8 or claims 9 to 19.

**22.** A communication system, comprising a first apparatus and/or a second apparatus, wherein the first apparatus is configured to perform the method according to any one of claims 1 to 8, and the second apparatus is configured to perform the method according to any one of claims 9 to 19.

**23.** A computer-readable storage medium, wherein the computer-readable storage medium stores instructions, and when the instructions are run on a computer, the computer is caused to perform the method according to any one of claims 1 to 8 or claims 9 to 19.

**24.** A chip system, wherein the chip system comprises a processor and an interface, and the processor is configured to execute a computer program, to cause the chip system to implement the method according to any one of claims 1 to 8 or claims 9 to 19.

**25.** A computer program product, comprising instructions, wherein when the instructions are run on a computer, the computer is caused to perform the method according to any one of claims 1 to 8 or claims 9 to 19.

Network device                                    Terminal

## FIG. 1

| Base station | | Terminal |
|---|---|---|

1. The base station sends channel measurement configuration information

2. The base station sends a channel measurement reference signal

3. The terminal performs channel measurement based on a pilot, to obtain a pilot measurement result, and feeds back CSI to the base station

4. The base station sends data based on the CSI fed back by the terminal

## FIG. 2

| First apparatus | | Second apparatus |
|---|---|---|

S101: The second apparatus sends a reference signal, where a frequency domain position of the reference signal and a transmit antenna port corresponding to the frequency domain position are a combination of frequency domain position and transmit antenna port that corresponds to a first index in an arrangement matrix

S102: The first apparatus sends a first channel matrix or a second channel matrix

## FIG. 3

1. Combine channel matrices of a plurality of time units into a training matrix A

nTx

nSc

nRx

Channel matrices of the plurality of time units

n

m

n    A

...

Training matrix

2. Perform SVD decomposition on the training matrix A, and determine a first projection matrix U based on a rank of a first projection matrix

m

n    A

...

=

r

n    U

First projection matrix

Training matrix

r        m

S        $V^H$    r

Projection coefficient D

3. Perform rotation QR decomposition on the first projection matrix U, to obtain an arrangement matrix P

n                r

r

$U^H$           $P^T$        r

First projection matrix

Arrangement matrix

r        r

Q        R        r

r

r        θ    =

Second projection matrix

P

Arrangement matrix

U

First projection matrix

FIG. 4

EP 4 734 424 A1

FIG. 5

FIG. 6

FIG. 7

$k^{th}$ transmit antenna port

$(k-1)^{th}$ transmit antenna port

...

$2^{nd}$ transmit antenna port

$1^{st}$ transmit antenna port

$i^{th}$ frequency domain position

| $h_{i,k,1}$ | $h_{i,k,2}$ | ... | $h_{i,k,j}$ | ... | $h_{i,k,n}$ |

$(i-1)^{th}$ frequency domain position

| $h_{i-1,k-1,1}$ | $h_{i-1,k-1,2}$ | ... | $h_{i-1,k-1,j}$ | ... | $h_{i-1,k-1,n}$ |

...

$2^{nd}$ frequency domain position

| $h_{2,2,1}$ | $h_{2,2,2}$ | ... | $h_{2,2,j}$ | ... | $h_{2,2,n}$ |

$1^{st}$ frequency domain position

| $h_{1,1,1}$ | $h_{1,1,2}$ | ... | $h_{1,1,j}$ | ... | $h_{1,1,n}$ |

Receive antenna port
(n receive antenna ports in total)

FIG. 8

First apparatus

Second apparatus

S201: The first apparatus determines a first channel matrix and/or a second channel matrix based on a reference signal

S202: The first apparatus sends the first channel matrix to the second apparatus

FIG. 9

| First apparatus | | Second apparatus |
|---|---|---|

S301: The first apparatus performs channel estimation based on a reference signal, to determine a first channel matrix

S302: The first apparatus multiplies the first channel matrix by an inverse matrix of a second projection matrix, to obtain a second channel matrix

S303: The first apparatus sends the second channel matrix to the second apparatus

FIG. 10

FIG. 11

FIG. 12

Comparison of normalized rates under different SNR conditions

| | Signal-to-noise ratio SNR=—10 dB | Signal-to-noise ratio SNR=—4 dB | Signal-to-noise ratio SNR=8 dB | Signal-to-noise ratio SNR=20 dB | Ideal channel estimation ideal channel estimation | Ideal channel ideal channel |
|---|---|---|---|---|---|---|
| ■ Quantity of reference signals=11 | 62.70% | 82.29% | 96.39% | 99.61% | 99.61% | 100% |
| ▨ Quantity of reference signals=50 | 66.38% | 83.86% | 97.34% | 99.22% | 100% | 100% |

■ Quantity of reference signals=11    ▨ Quantity of reference signals=50

FIG. 13

EP 4 734 424 A1

1400

1401

Communication unit

1402

Processing unit

FIG. 14

1501

Communication apparatus

Processor

Memory

Transceiver

1502

1503

FIG. 15

## INTERNATIONAL SEARCH REPORT

| International application No. |
|---|
| **PCT/CN2023/113410** |

### A. CLASSIFICATION OF SUBJECT MATTER

H04L 5/00(2006.01)i

According to International Patent Classification (IPC) or to both national classification and IPC

### B. FIELDS SEARCHED

Minimum documentation searched (classification system followed by classification symbols)

IPC:H04L H04B H04W

Documentation searched other than minimum documentation to the extent that such documents are included in the fields searched

Electronic data base consulted during the international search (name of data base and, where practicable, search terms used)

3GPP, CNTXT, ENTXT, DWPI, CNKI, IEEE: 参考信号, 时间, 间隔, 单元, 分解, 矩阵, 频域, 位置, 维度, 天线, 端口, 投影, 信道矩阵, 训练, antenna, channel, frequency, index, mapping, matrix, rank, reference signal, SVD, CSI-RS, TTI

### C. DOCUMENTS CONSIDERED TO BE RELEVANT

| Category* | Citation of document, with indication, where appropriate, of the relevant passages | Relevant to claim No. |
|---|---|---|
| A | CN 115915266 A (HUAWEI TECHNOLOGIES CO., LTD.) 04 April 2023 (2023-04-04) description, paragraphs 101-276 | 1-25 |
| A | KR 20160002077 A (LG ELECTRONICS, INC. et al.) 07 January 2016 (2016-01-07) entire document | 1-25 |
| A | US 2014064109 A1 (MOTOROLA MOBILITY LLC) 06 March 2014 (2014-03-06) entire document | 1-25 |
| A | WO 2022206470 A1 (HUAWEI TECHNOLOGIES CO., LTD.) 06 October 2022 (2022-10-06) entire document | 1-25 |
| A | WO 2023124818 A1 (HUAWEI TECHNOLOGIES CO., LTD.) 06 July 2023 (2023-07-06) entire document | 1-25 |
| A | HUAWEI et al. "Design for Type II Feedback" *3GPP TSG RAN WG1 Meeting #87, R1-1611676*, 18 November 2016 (2016-11-18), entire document | 1-25 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 April 2024** | **24 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 734 424 A1

| Patent document cited in search report | | | Publication date (day/month/year) | Patent family member(s) | | | Publication date (day/month/year) |
|---|---|---|---|---|---|---|---|
| CN | 115915266 | A | 04 April 2023 | None | | | |
| KR | 20160002077 | A | 07 January 2016 | US | 2015381244 | A1 | 31 December 2015 |
| | | | | KR | 20160002076 | A1 | 07 January 2016 |
| | | | | KR | 20160002078 | A1 | 07 January 2016 |
| US | 2014064109 | A1 | 06 March 2014 | WO | 2014036070 | A1 | 06 March 2014 |
| | | | | EP | 2891260 | A1 | 08 July 2015 |
| | | | | CN | 104782065 | A | 15 July 2015 |
| WO | 2022206470 | A1 | 06 October 2022 | CN | 115133967 | A | 06 October 2022 |
| WO | 2023124818 | A1 | 06 July 2023 | CN | 116418374 | A | 11 July 2023 |

**INTERNATIONAL SEARCH REPORT**
**Information on patent family members**

International application No.

**PCT/CN2023/113410**

Form PCT/ISA/210 (patent family annex) (July 2022)